(19) Europäisches Patentamt / European Patent Office / Office européen des brevets

(11) **EP 4 447 353 A1**

(12) **EUROPEAN PATENT APPLICATION**
published in accordance with Art. 153(4) EPC

(43) Date of publication:
**16.10.2024   Bulletin 2024/42**

(21) Application number: **22914304.5**

(22) Date of filing: **15.12.2022**

(51) International Patent Classification (IPC):
**H04L 1/06** $^{(2006.01)}$

(52) Cooperative Patent Classification (CPC):
**H04B 7/0408; H04L 1/06**

(86) International application number:
**PCT/CN2022/139343**

(87) International publication number:
**WO 2023/125049 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021   CN 202111674328**

(71) Applicant: **Huawei Technologies Co., Ltd.**
**Shenzhen, Guangdong 518129 (CN)**

(72) Inventors:
• **LI, Ting**
  **Shenzhen, Guangdong 518129 (CN)**
• **WANG, Xiaohan**
  **Shenzhen, Guangdong 518129 (CN)**
• **JIN, Huangping**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **CHANNEL STATE INFORMATION FEEDBACK METHOD AND APPARATUS, MEDIUM, AND PROGRAM PRODUCT**

(57)    This application discloses a channel state information feedback method and apparatus, a medium, and a program product. A terminal obtains a long-period reporting amount of a PMI in channel state information. $N_1$ characteristic subspace beams are represented by a linear combination of $M_1$ DFT base vectors in a first group of DFT base vectors, and $N_2$ characteristic subspace beams are represented by a linear combination of $M_2$ DFT base vectors in a second group of DFT base vectors. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The terminal sends the long-period reporting amount of the PMI to an access network device. Beams with different energy are represented by linear combinations with different quantities of DFT base vectors based on an energy difference between characteristic subspace beams, so that the channel state information can be fed back with low overheads and high precision.

FIG. 5

## Description

This application claims priority to Chinese Patent Application No. 202111674328.8, filed with the China National Intellectual Property Administration on December 30, 2021 and entitled "CHANNEL STATE INFORMATION FEEDBACK METHOD AND APPARATUS, MEDIUM, AND PROGRAM PRODUCT", which is incorporated herein by reference in its entirety.

## TECHNICAL FIELD

This application relates to the field of communication technologies, and in particular, to a channel state information (channel state information, CSI) feedback method and apparatus, a medium, and a program product.

## BACKGROUND

To make full use of sparseness of channels in space domain and frequency domain and improve precision of precoding matrix indicator (precoding matrix indicator, PMI) feedback, a codebook based on characteristic subspace is proposed in recent years. The codebook approximates a downlink channel or a main eigenvector of a downlink channel by using a linear combination of long-period characteristic subspace beams.

For this type of codebook, a terminal needs to feed back the characteristic subspace beam in a long period and feed back a beam superposition coefficient in a short period. If each element of the characteristic subspace beam is directly fed back in a long period in a scalar quantization manner (each value of the vector is fed back to an access network device), feedback overheads are high. Therefore, how to feed back the long-period characteristic subspace beam with low overheads and high precision is a key problem of this type of codebook.

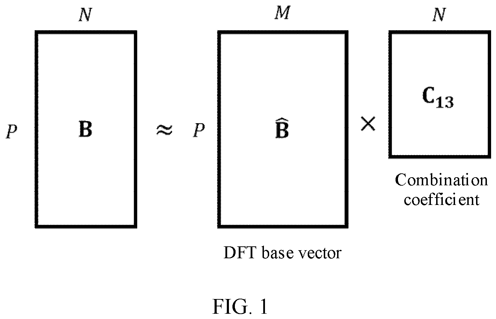

A uniform projection quantization solution is currently used to resolve the long-period feedback problem of the characteristic subspace beam. FIG. 1 is a diagram of uniform projection quantization of a characteristic subspace beam. Each beam in a characteristic subspace beam set is approximately represented by using a linear combination of a group of discrete Fourier transform (discrete Fourier transform, DFT) base vectors, where P indicates a dimension of the characteristic subspace beam, N indicates a quantity of characteristic subspace beams, and M is a quantity of selected DFT base vectors. The uniform projection quantization solution is used, so that the terminal does not need to directly report P*N elements included in the characteristic subspace beam, and needs to report only indexes of the M DFT base vectors and M*N combination coefficients. This can reduce the feedback overheads.

However, in the uniform projection quantization solution, each characteristic subspace beam is projected with a same group of DFT base vectors, quantities M of selected DFT base vectors are the same, and quantities of bits corresponding to quantization feedback amounts are the same. Actually, there is an energy difference between characteristic subspace beams. When a linear/bilinear combination of characteristic subspace beams is used to approximate a downlink channel or a main eigenvector, a characteristic subspace beam with higher energy usually corresponds to a higher superposition coefficient, and whether feedback for the beam is precise has a great impact on overall precision of PMI feedback.

In view of this, how to feed back channel state information based on the characteristic subspace beam with low overheads and high precision is a problem that needs to be resolved in this application.

## SUMMARY

This application provides a channel state information feedback method and apparatus, a medium, and a program product, to feed back channel state information with low overheads and high precision.

According to a first aspect, a channel state information feedback method is provided. The method includes: A terminal obtains a long-period reporting amount of a precoding matrix indicator PMI in channel state information, where the long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers, and the long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors; and the terminal sends the long-period reporting amount of the PMI to an access network device. In this aspect, the terminal divides a beam set into two parts based on an energy difference between characteristic subspace beams. Some beams with high energy are represented by a linear combination with more DFT base vectors, and some beams with low energy are represented by a linear combination with fewer DFT base vectors. When overheads are fixed, overall precision of beam quantization projection is improved. This improves precision of PMI feedback, or reduces overheads while minimizing performance losses.

In a possible implementation, the method further includes: The terminal receives first projection quantization information from the access network device, where the first projection quantization information includes at least one of the following: first characteristic subspace beam grouping information, first DFT base vector selection range information, and first DFT base vector quantity information; and the terminal determines the long-period reporting amount based on the first projection quantization information. In this implementation, the terminal can accurately determine the long-period reporting amount by receiving the projection quantization information configured by the access network device.

In another possible implementation, the method further includes: The terminal sends second projection quantization information to the access network device, where the second projection quantization information includes at least one of the following: second characteristic subspace beam grouping information, second DFT base vector selection range information, and second DFT base vector quantity information; and the terminal determines the long-period reporting amount based on the first projection quantization information and the second projection quantization information. In this implementation, the terminal may report the projection quantization information, and may accurately and flexibly determine the long-period reporting amount based on the projection quantization information configured by the access network device and the projection quantization information reported by the terminal.

In still another possible implementation, the terminal may further determine the long-period reporting amount based on predefined projection quantization information in combination with the projection quantization information configured by the access network device and/or the projection quantization information reported by the terminal, thereby reducing signaling overheads.

In still another possible implementation, the terminal may further determine the long-period reporting amount based on the predefined projection quantization information, thereby reducing signaling overheads.

In still another possible implementation, the method further includes: The terminal determines a short-period reporting amount of the PMI, where the short-period reporting amount includes a beam superposition coefficient, the long-period reporting amount and the short-period reporting amount are used to determine channel information or a precoding matrix, and the channel information or the precoding matrix is represented by linear superposition of the $N$ characteristic subspace beams; and

the terminal sends the short-period reporting amount of the PMI to the access network device. In this implementation, the terminal may further feed back the short-period reporting amount of the PMI, and the long-period reporting amount and the short-period reporting amount are used to determine the channel information or the precoding matrix.

In still another possible implementation, before the terminal sends the short-period reporting amount of the PMI, the method further includes: The terminal performs orthogonalization on the $N$ characteristic subspace beams; and the terminal determines the beam superposition coefficient based on orthogonalized $N$ characteristic subspace beams. In this implementation, the terminal determines the beam superposition coefficient based on the orthogonalized beams, and reports the beam superposition coefficient, so that the access network device can more accurately recover the channel information/precoding matrix based on the short-period reporting amount and the orthogonalized beams recovered based on the long-period reporting amount.

According to a second aspect, a channel state information feedback method is provided. The method includes: An access network device receives a long-period reporting amount of a precoding matrix indicator PMI in channel state information from a terminal, where the long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers, and the long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors; and the access network device recovers the $N$ characteristic subspace beams based on the long-period reporting amount. In this aspect, the access network device receives the long-period reporting amount fed back by the terminal. The long-period reporting amount is obtained by dividing, by the terminal, a beam set into two parts based on an energy difference between characteristic subspace beams. Some beams with high energy are represented by a linear combination with more DFT base vectors, and some beams with low energy are represented by a linear combination with fewer DFT base vectors. When overheads are fixed, overall precision of beam quantization projection is improved. This improves precision of PMI feedback, or reduces overheads while minimizing performance losses.

In a possible implementation, the method further includes: The access network device sends first projection quantization information to the terminal, where the first projection quantization information includes at least one of the following: first characteristic subspace beam grouping information, first DFT base vector selection range information, and first DFT base vector quantity information; and that the access network device recovers the $N$ characteristic subspace beams based on the long-period reporting amount includes: The access network device recovers the $N$ characteristic subspace beams based on the first projection quantization information and the long-period reporting amount.

In another possible implementation, the method further includes: The access network device receives second projection quantization information from the terminal, where the second projection quantization information includes at least one of the following: second characteristic subspace beam grouping information, second DFT base vector selection range information, and second DFT base vector quantity information; and that the access network device recovers the $N$ characteristic subspace beams based on the long-period reporting amount includes: The access network device recovers the $N$ characteristic subspace beams based on the first projection quantization information, the second projection quantization information, and the long-period reporting amount.

In still another possible implementation, the method further includes: The access network device receives a short-period reporting amount of the PMI from the terminal, where the short-period reporting amount includes a beam superposition coefficient; and the access network device determines channel information or a precoding matrix based on the short-period reporting amount and the long-period reporting amount, where the channel information or the precoding matrix is represented by linear superposition of the $N$ characteristic subspace beams.

In still another possible implementation, after that the access network device recovers the $N$ characteristic subspace beams based on the long-period reporting amount, the method further includes: The access network device performs orthogonalization on the recovered $N$ characteristic subspace beams; and the access network device determines the channel information or the precoding matrix based on the beam superposition coefficient and orthogonalized $N$ characteristic subspace beams.

According to a third aspect, a channel state information feedback method is provided. The method includes: A terminal obtains a long-period reporting amount of a precoding matrix indicator PMI in channel state information, where the long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers, and the long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors; the terminal determines a short-period reporting amount of the PMI, where the short-period reporting amount includes a beam superposition coefficient, the long-period reporting amount and the short-period reporting amount are used to determine channel information or a precoding matrix, and the channel information or the precoding matrix is represented by linear superposition of the $N$ characteristic subspace beams; and the terminal sends the long-period reporting amount and the short-period reporting amount of the PMI. In this aspect, the terminal feeds back the long-period reporting amount and the short-period reporting amount of the PMI. The long-period reporting amount and the short-period reporting amount are used to determine the channel information or the precoding matrix.

In a possible implementation, before the terminal sends the short-period reporting amount of the PMI, the method further includes: The terminal performs orthogonalization on the $N$ characteristic subspace beams; and the terminal determines the beam superposition coefficient based on orthogonalized $N$ characteristic subspace beams. In this implementation, the terminal determines the beam superposition coefficient based on the orthogonalized beams, and reports the beam superposition coefficient, so that the access network device can more accurately recover the channel information/precoding matrix based on the short-period reporting amount and the orthogonalized beams recovered based on the long-period reporting amount.

According to a fourth aspect, a channel state information feedback method is provided. The method includes: An access network device receives a long-period reporting amount of a precoding matrix indicator PMI in channel state information, where the long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers, and the long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors; the access network device receives a short-period reporting amount of the PMI, where the short-period reporting amount includes a beam superposition coefficient; the access network device recovers the $N$ characteristic subspace beams based on the long-period reporting amount; and the access network device determines channel information or a precoding matrix based on the short-period reporting amount and the long-period reporting amount, where the channel information or the precoding matrix is represented by linear superposition of the $N$ characteristic subspace beams. In this aspect, the access network device receives the long-period reporting amount and the short-period reporting amount of the PMI that are fed back by the terminal, and may determine the channel information or the precoding matrix based on the long-period reporting amount and the short-period reporting amount.

In a possible implementation, after that the access network device recovers the $N$ characteristic subspace beams based on the long-period reporting amount, the method further includes: The access network device performs orthogonalization on the recovered $N$ characteristic subspace beams; and the access network device determines the channel information or the precoding matrix based on the beam superposition coefficient and orthogonalized $N$ characteristic subspace beams. According to a fifth aspect, a channel state information feedback apparatus is provided. The channel state information feedback apparatus may implement the method in the first aspect. For example, the channel state information feedback apparatus may be a chip or a terminal. The foregoing method may be implemented by software, hardware, or hardware executing corresponding software.

In a possible implementation, the apparatus includes a transceiver unit and a processing unit. The processing unit is configured to obtain a long-period reporting amount of a precoding matrix indicator PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The transceiver unit is configured to send the long-period reporting amount of the PMI.

Optionally, the transceiver unit is further configured to receive first projection quantization information. The first projection quantization information includes at least one of the following: first characteristic subspace beam grouping information, first DFT base vector selection range information, and first DFT base vector quantity information. The processing unit is configured to determine the long-period reporting amount based on the first projection quantization information. Optionally, the transceiver unit is further configured to send second projection quantization information. The second projection quantization information includes at least one of the following: second characteristic subspace beam grouping information, second DFT base vector selection range information, and second DFT base vector quantity information. The processing unit is further configured to determine the long-period reporting amount based on the first projection quantization information and the second projection quantization information.

Optionally, the processing unit is further configured to determine a short-period reporting amount of the PMI. The short-period reporting amount includes a beam superposition coefficient, and the long-period reporting amount and the short-period reporting amount are used to determine channel information or a precoding matrix. The channel information or the precoding matrix is represented by linear superposition of the $N$ characteristic subspace beams. The transceiver unit is further configured to send the short-period reporting amount of the PMI.

Optionally, the processing unit is further configured to perform orthogonalization on the $N$ characteristic subspace beams; and the processing unit is further configured to determine the beam superposition coefficient based on orthogonalized $N$ characteristic subspace beams.

In another possible implementation, the channel state information feedback apparatus is configured to perform the method in the first aspect and possible implementations of the first aspect.

According to a sixth aspect, a channel state information feedback apparatus is provided. The channel state information feedback apparatus may implement the method in the second aspect. For example, the channel state information feedback apparatus may be a chip or an access network device. The foregoing method may be implemented by software, hardware, or hardware executing corresponding software.

In a possible implementation, the apparatus includes a transceiver unit and a processing unit. The transceiver unit is configured to receive a long-period reporting amount of a precoding matrix indicator PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The processing unit is configured to recover the $N$ characteristic subspace beams based on the long-period reporting amount.

Optionally, the transceiver unit is further configured to send first projection quantization information. The first projection quantization information includes at least one of the following: first characteristic subspace beam grouping information, first DFT base vector selection range information, and first DFT base vector quantity information. The processing unit is configured to recover the $N$ characteristic subspace beams based on the first projection quantization information and the long-period reporting amount.

Optionally, the transceiver unit is further configured to receive second projection quantization information. The second projection quantization information includes at least one of the following: second characteristic subspace beam grouping information, second DFT base vector selection range information, and second DFT base vector quantity information. The processing unit is further configured to recover the $N$ characteristic subspace beams based on the first projection quantization information, the second projection quantization information, and the long-period reporting amount.

Optionally, the transceiver unit is further configured to receive a short-period reporting amount of the PMI. The short-period reporting amount includes a beam superposition coefficient. The processing unit is further configured to determine channel information or a precoding matrix based on the short-period reporting amount and the long-period reporting amount. The channel information or the precoding matrix is represented by linear superposition of the $N$ characteristic subspace beams.

Optionally, the processing unit is further configured to perform orthogonalization on the recovered $N$ characteristic subspace beams; and the processing unit is further configured to determine the channel information or the precoding matrix based on the beam superposition coefficient and orthogonalized $N$ characteristic subspace beams.

In another possible implementation, the channel state information feedback apparatus is configured to perform the method in the second aspect and possible implementations of the second aspect.

With reference to the first aspect, the second aspect, the fifth aspect, or the sixth aspect, in still another possible implementation, the first characteristic subspace beam grouping information includes: $N$ and $N_1$; $N$ and a beam ratio $\beta$; $N$; or $N_1$ and $N_2$.

With reference to the first aspect, the second aspect, the fifth aspect, or the sixth aspect, in still another possible implementation, the first DFT base vector selection range information indicates that the second group of DFT base vectors is a subset of the first group of DFT base vectors. With reference to the first aspect, the second aspect, the fifth aspect, or the sixth aspect, in still another possible implementation, the $M_1$ DFT base vectors and the $M_2$ DFT base vectors are indicated by using a combinatorial number. A dimension of the characteristic subspace beam is $P \times 1$, a corresponding DFT base vector universal set includes P DFT base vectors, and the indication information of the $M_1$ DFT base vectors indicates one of a plurality of first base vector groups selected from the P DFT base vectors. The first base vector group includes $M_1$ base vectors, and the indication information of the $M_2$ DFT base vectors indicates one of a plurality of second base vector groups selected from the $M_1$ DFT base vectors. The second base vector group includes $M_2$ base vectors.

With reference to the first aspect, the second aspect, the fifth aspect, or the sixth aspect, in still another possible implementation, the $M_1$ DFT base vectors are indicated by using a first bitmap, and the first bitmap includes P bits. Bit values corresponding to the selected $M_1$ DFT base vectors are first values, and bit values corresponding to unselected $(P - M_1)$ DFT base vectors are second values. The $M_2$ DFT base vectors are indicated by using a second bitmap, and the second bitmap includes $M_1$ bits. Bit values corresponding to the selected $M_2$ DFT base vectors are first values, and bit values corresponding to unselected $(M_1 - M_2)$ DFT base vectors are second values.

With reference to the first aspect, the second aspect, the fifth aspect, or the sixth aspect, in still another possible implementation, the first DFT base vector selection range information indicates that the second group of DFT base vectors is not a subset of the first group of DFT base vectors. With reference to the first aspect, the second aspect, the fifth aspect, or the sixth aspect, in still another possible implementation, the dimension of the characteristic subspace beam is $P \times 1$, and the corresponding DFT base vector universal set includes P DFT base vectors. The indication information of the $M_1$ DFT base vectors indicates one of a plurality of third base vector groups selected from the P DFT base vectors. The third base vector group includes $M_1$ base vectors, and the indication information of the $M_2$ DFT base vectors indicates one of a plurality of fourth base vector groups selected from the P DFT base vectors. The fourth base vector group includes $M_2$ base vectors.

With reference to the first aspect, the second aspect, the fifth aspect, or the sixth aspect, in still another possible implementation, the $M_1$ DFT base vectors are indicated by using a third bitmap, and the third bitmap includes P bits. Bit values corresponding to the selected $M_1$ DFT base vectors are first values, and bit values corresponding to unselected $(P - M_1)$ DFT base vectors are second values. The $M_2$ DFT base vectors are indicated by using a fourth bitmap, and the fourth bitmap includes P bits. Bit values corresponding to the selected $M_2$ DFT base vectors are first values, and bit values corresponding to unselected $(P - M_2)$ DFT base vectors are second values. With reference to the first aspect, the second aspect, the fifth aspect, or the sixth aspect, in still another possible implementation, the first DFT base vector quantity information includes: $M_1$ and a base vector quantity ratio $\delta$; $M_1$; or $M_1$ and $M_2$.

According to a seventh aspect, a channel state information feedback apparatus is provided. The channel state information feedback apparatus may implement the method in the third aspect. For example, the channel state information feedback apparatus may be a chip or a terminal. The foregoing method may be implemented by software, hardware, or hardware executing corresponding software.

In a possible implementation, the apparatus includes a transceiver unit and a processing unit. The processing unit is configured to obtain a long-period reporting amount of a precoding matrix indicator PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N, N_1, N_2, M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The processing unit is further configured to determine a short-period reporting amount of the PMI. The short-period reporting amount includes a beam superposition coefficient, the long-period reporting amount and the short-period reporting amount are used to determine channel information or a precoding matrix, and the channel information or the precoding matrix is represented by linear superposition of the $N$ characteristic subspace beams. The transceiver unit is configured to send the long-period reporting amount and the short-period reporting amount of the PMI.

Optionally, the processing unit is further configured to perform orthogonalization on the $N$ characteristic subspace beams; and the processing unit is further configured to determine the beam superposition coefficient based on orthogonalized $N$ characteristic subspace beams.

In another possible implementation, the channel state information feedback apparatus is configured to perform the method in the third aspect and possible implementations of the third aspect.

According to an eighth aspect, a channel state information feedback apparatus is provided. The channel state information feedback apparatus may implement the method in the fourth aspect. For example, the channel state information feedback apparatus may be a chip or an access network device. The foregoing method may be implemented by software, hardware, or hardware executing corresponding software.

In a possible implementation, the apparatus includes a transceiver unit and a processing unit. The transceiver unit is configured to receive a long-period reporting amount of a precoding matrix indicator PMI in channel state information. The long-period reporting amount is used to determine $N$ characteristic subspace beams, the

$N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N, N_1, N_2, M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The transceiver unit is further configured to receive a short-period reporting amount of the PMI. The short-period reporting amount includes a beam superposition coefficient. The processing unit is configured to recover the $N$ characteristic subspace beams based on the long-period reporting amount. The processing unit is further configured to determine channel information or a precoding matrix based on the short-period reporting amount and the long-period reporting amount. The channel information or the precoding matrix is represented by linear superposition of the $N$ characteristic subspace beams.

Optionally, the processing unit is further configured to perform orthogonalization on the recovered $N$ characteristic subspace beams; and the processing unit is further configured to determine the channel information or the precoding matrix based on the beam superposition coefficient and orthogonalized $N$ characteristic subspace beams.

In another possible implementation, the channel state information feedback apparatus is configured to perform the method in the fourth aspect and possible implementations of the fourth aspect.

In still another possible implementation, the channel state information feedback apparatus in the fifth aspect to the eighth aspect includes a processor coupled to a memory, and the processor is configured to support the apparatus in performing a corresponding function in the channel state information feedback method. The memory is configured to be coupled to the processor, and stores a computer program (or computer-executable instructions) and/or data necessary for the apparatus. Optionally, the channel state information feedback apparatus may further include a communication interface configured to support communication between the apparatus and another network element, for example, sending or receiving of data and/or a signal. For example, the communication interface may be a transceiver, a circuit, a bus, a module, or a communication interface of another type. Optionally, the memory may be located inside the channel state information feedback apparatus and integrated with the processor, or may be located outside the channel state information feedback apparatus.

In another possible implementation, the channel state information feedback apparatus in the fifth aspect to the eighth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a channel state information feedback apparatus other than the channel state information feedback apparatus and transmit the signal to the processor, or send a signal from the processor to a channel state information feedback apparatus other than the channel state information feedback apparatus. When the channel state information feedback apparatus is a chip, the transceiver apparatus is a transceiver circuit or an input/output interface. When the channel state information feedback apparatus in the fifth aspect to the eighth aspect is a chip, a sending unit may be an output unit, for example, an output circuit or a communication interface; and a receiving unit may be an input unit, for example, an input circuit or a communication interface. When the channel state information feedback apparatus is a terminal, a sending unit may be a transmitter or a transmitter machine, and a receiving unit may be a receiver or a receiver machine.

According to a ninth aspect, a communication system is provided. The communication system includes the channel state information feedback apparatus according to the fifth aspect or any implementation of the fifth aspect, and at least one channel state information feedback apparatus according to the sixth aspect or any implementation of the sixth aspect.

According to a tenth aspect, a communication system is provided. The communication system includes the channel state information feedback apparatus according to the seventh aspect or any implementation of the seventh aspect, and at least one channel state information feedback apparatus according to the eighth aspect or any implementation of the eighth aspect.

According to an eleventh aspect, a computer-readable storage medium is provided. The computer-readable storage medium stores a computer program or instructions. When the program or the instructions are executed by a processor, the method according to the first aspect or any implementation of the first aspect is implemented, the method according to the second aspect or any implementation of the second aspect is implemented, or the method according to the third aspect or any implementation of the third aspect is implemented, or the method according to the fourth aspect or any implementation of the fourth aspect is implemented.

According to a twelfth aspect, a computer program product is provided. When the computer program product runs on a computing device, the method according to the first aspect or any implementation of the first aspect is implemented, the method according to the second aspect or any implementation of the second aspect is implemented, or the method according to the third aspect or any implementation of the third aspect is implemented, or the method according to the fourth aspect or any implementation of the fourth aspect is implemented.

## BRIEF DESCRIPTION OF DRAWINGS

FIG. 1 is a diagram of uniform projection quantization of a characteristic subspace beam;
FIG. 2 is a diagram of a structure of a communication system according to an embodiment of this application;
FIG. 3 is a diagram of a structure of a characteristic subspace codebook combined in space domain and frequency domain according to an embodiment of this application;
FIG. 4 is a basic schematic flowchart for obtaining channel state information according to an embodiment of this application;
FIG. 5 is a schematic flowchart of a channel state information feedback method according to an embodiment of this application;
FIG. 6 is a schematic flowchart of another channel state information feedback method according to an embodiment of this application;
FIG. 7a is a diagram of a non-uniform projection quantization solution of a characteristic subspace beam according to an embodiment of this application;
FIG. 7b is a diagram of another non-uniform projection quantization solution of a characteristic subspace beam according to an embodiment of this application;
FIG. 8 is a schematic flowchart of still another channel state information feedback method according to an embodiment of this application;
FIG. 9 is a diagram of a structure of a channel state information feedback apparatus according to an embodiment of this application; and
FIG. 10 is a diagram of a structure of another channel state information feedback apparatus according to an embodiment of this application.

## DESCRIPTION OF EMBODIMENTS

The following describes embodiments of this application with reference to accompanying drawings in embodiments of this application.

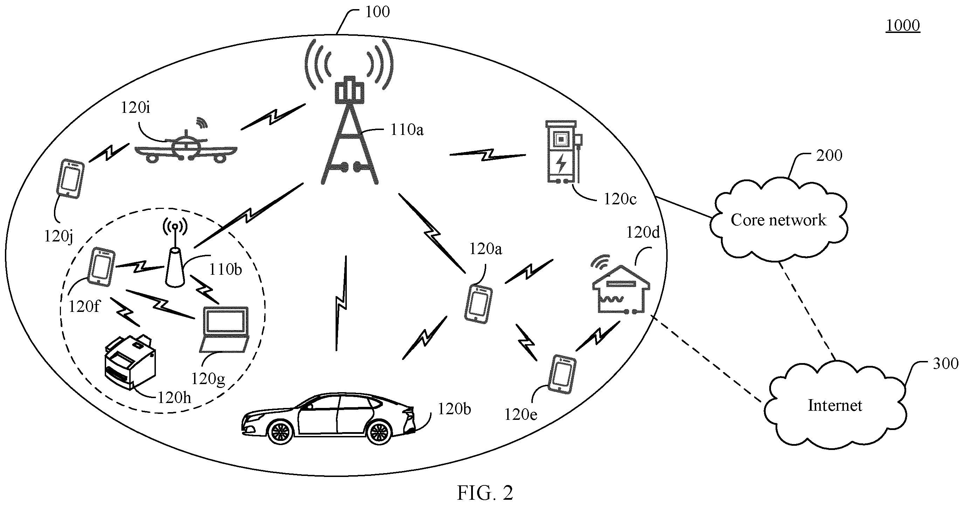

Technical solutions provided in this application may be applied to various communication systems. The technical solutions provided in this application may be applied to a 5th generation (5th generation, 5G) communication system, a future evolved system, a plurality of communication convergence systems, or may be applied to an existing communication system, or the like. Application scenarios of the technical solutions provided in this application may include a plurality of types, such as machine to machine (machine to machine, M2M), macro-micro communication, enhanced mobile broadband (enhanced mobile broadband, eMBB), ultra-reliable low-latency communication (ultra-reliable low-latency communication, uRLLC), and massive machine-type communication (massive machine-type communication, mMTC). These scenarios may include but are not limited to: a scenario of communication between terminals, a scenario of communication between network devices, a scenario of communication between a network device and a terminal, and the like. The network device includes an access network device and a core network device. The following provides descriptions by using an example in which the technical solutions are applied to the scenario of communication between an access network device and a terminal. FIG. 2 is a diagram of an architecture of a communication system 1000 to which an embodiment of this application is applied. As shown in FIG. 2, the communication system includes a radio access network 100 and a core network 200. Optionally, the communication system 1000 may further include an internet 300. The radio access network 100 may include at least one access network device (for example, 110a and 110b in FIG. 2), and may further include at least one terminal (for example, 120a to 120j in FIG. 2). The terminal is connected to the access network device in a wireless manner, and the access network device is connected to the core network in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. Terminals may be connected to each other in a wired or wireless manner, and access network devices may be connected to each other in a wired or wireless manner. FIG. 2 is merely a diagram, and the communication system may further include another network device, for example, may further include a wireless relay device and a wireless backhaul device that are not drawn in FIG. 2.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit, for example, a central unit (central unit, CU) or a distributed unit (distributed unit, DU), that completes some functions of the access network device. The access network device may be a macro base station (like 110a in FIG. 2), or may be a micro base station or an indoor base station (like 110b in FIG. 2), or may be a relay node or a donor node. A specific technology and a specific device form used by the access network device are not limited in embodiments of this application.

The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an automatic driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application. The access network device and the terminal may be at fixed locations, or may be mobile. The access network device and the terminal may be deployed on land, including indoor, outdoor, handheld, or vehicle-mounted; may be deployed on a water surface; or may be deployed on an airplane, a balloon, or an artificial satellite in the air. An application scenario of the access network device and the terminal is not limited in embodiments of this application.

Roles of the access network device and the terminal may be relative. For example, the helicopter or uncrewed aerial vehicle 120i in FIG. 2 may be configured as a mobile access network device. For the terminal 120j that accesses the radio access network 100 by using 120i, the terminal 120i is an access network device. However, for the access network device 110a, 120i is a terminal, that is, 110a and 120i communicate with each other according to a wireless air interface protocol. Certainly, 110a and 120i may alternatively communicate with each other according to an interface protocol between access network devices. In this case, for 110a, 120i is also an access network device. Therefore, both the access network device and the terminal may be collectively referred to as communication apparatuses, 110a and 110b in FIG. 2 may be referred to as communication apparatuses with access network device functions, and 120a to 120j in FIG. 2 may be referred to as communication apparatuses with terminal functions.

Communication may be performed between an access network device and a terminal, between access network devices, and between terminals through a licensed spectrum, through an unlicensed spectrum, or through both a licensed spectrum and an unlicensed spectrum. Communication may be performed through a spectrum below 6 gigahertz (gigahertz, GHz), through a spectrum above 6 GHz, or through both a spectrum below 6 GHz and a spectrum above 6 GHz. A spectrum resource for wireless communication is not limited in embodiments of this application.

In embodiments of this application, the function of the access network device may be performed by a module (like a chip) in the access network device, or may be performed by a control subsystem including the function of the access network device. The control subsystem including the function of the access network device herein may be a control center in the foregoing application scenarios such as the smart grid scenario, the industrial control scenario, the smart transportation scenario, and the smart city scenario. A function of the terminal may alternatively be performed by a module (like a chip or a modem) in the terminal, or may be performed by an apparatus including the function of the terminal.

In this application, the access network device sends a downlink signal or downlink information to the terminal, where the downlink information is carried on a downlink channel; and the terminal sends an uplink signal or uplink information to the access network device, where the uplink information is carried on an uplink channel. To communicate with the access network device, the terminal needs to establish a wireless connection to a cell controlled by the access network device. The cell that establishes a wireless connection to the terminal is referred to as a serving cell of the terminal. When communicating with the serving cell, the terminal is further interfered by a signal from a neighboring cell.

A 5G communication system has higher requirements for aspects such as system capacity and spectral efficiency. In the 5G communication system, application of a massive multiple-input multiple-output (massive MIMO) technology plays an important role in improving spectral efficiency of the system. When the MIMO technology is used, the access network device needs to precode data before sending the data to the terminal. How to perform precoding depends on CSI fed back by a user to the access network device. Therefore, accurate CSI feedback information is an important factor that affects system performance.

In a time division duplex (time division duplex, TDD) system, because an uplink channel and a downlink channel use a same frequency band, reciprocity is implemented. The access network device may obtain CSI of the downlink channel by using the uplink channel and by using channel reciprocity, and further perform precoding.

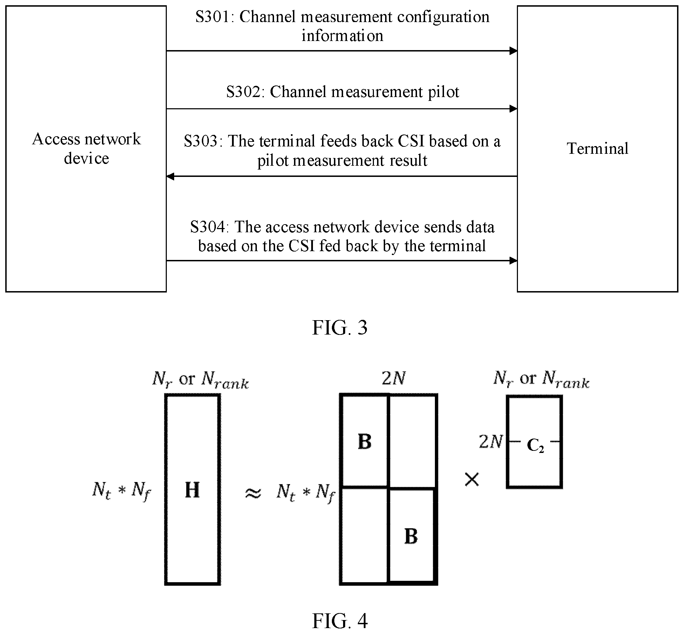

However, in a frequency division duplex (frequency division duplex, FDD) system, because an interval between uplink and downlink frequency bands is greater than bandwidth, there is no complete reciprocity between uplink and downlink channels. In a conventional FDD system, the user needs to feed back the CSI of the downlink channel to the access network device. A basic procedure is shown in FIG. 3. In step S301, the access network device needs to first send channel measurement configuration information to the terminal. The channel measurement configuration information is used to configure channel measurement, and notify the terminal of time and an action of channel measurement. Then, in step S302, the access network device sends a pilot (reference signal, RS) to the terminal for channel measurement. In step S303, the terminal performs measurement based on the pilot sent by the access network device, performs calculation to obtain a final CSI feedback amount, and feeds back CSI to the access network device. Then, in step S304, the access network device sends data based on the CSI fed back by the terminal. The access network device is configured to determine, based on a channel rank indicator (rank indicator, RI) fed back by the terminal, a quantity of streams for transmitting data to the terminal. The access network device is configured to determine, based on a channel quality indicator (channel quality indicator, CQI) fed back by the terminal, a modulation order for transmitting data to the terminal and a channel coding bit rate. The access network device determines, based on the PMI fed back by the terminal, precoding for transmitting data to the terminal.

PMI feedback is determined and reported based on a set of codebooks. Design of an FDD CSI codebook is a basic and important problem in the 5G communication system. In a current standard protocol of new radio (new radio, NR), channel quantization is performed for FDD CSI feedback by using information on the access network device side as a reference, and the PMI fed back by the terminal is determined based on a main eigenvector of a transmit end on the access network device side of a channel. An R15 Type II codebook uses the idea of space domain (angle) compression. The main eigenvector (that is, a precoding matrix of a single user) is represented by a linear combination of several DFT base vectors in space domain. Based on the R15 codebook, an R16 Type II codebook uses frequency-domain correlation between amplitudes and phase coefficients of different subbands to increase compression of frequency domain (delay). The main eigenvector is represented by a bilinear combination of several space-domain DFT base vectors and several frequency-domain DFT base vectors.

To make full use of sparseness of a channel in space domain and frequency domain and further improve precision of PMI feedback, a codebook based on characteristic subspace is proposed. The codebook approximates a downlink channel or a main eigenvector of a downlink channel by using a linear combination of characteristic subspace beams collected in a long period. Therefore, the characteristic subspace beam may also be referred to as a statistical characteristic subspace beam, and is a vector or a vector group that may be used to represent a statistical change rule of the channel in space domain, or in frequency domain, or in space domain and frequency domain. Generally, the characteristic subspace beam is obtained by performing eigenvalue decomposition on a statistical covariance matrix of channel information. The codebook may be represented by a group of characteristic subspace beams in a form of bilinear combination in each of space domain and frequency domain, and is similar to the R16 Type II codebook. Alternatively, the codebook may be represented by a group of characteristic subspace beams combined in space domain and frequency domain, as shown in FIG. 4. In FIG. 4, H indicates a matrix corresponding to characteristic subspace beams, $N_t$ indicates a quantity of transmit ports of the access network device, $N_f$ indicates a quantity of frequency domain units, and $N_t * N_f$ indicates that the characteristic subspace beams are combined in space domain and frequency domain. A dimension of a row vector of the matrix H is $N_r$ or an order of a rank (rank), and $N_r$ indicates a quantity of receive ports of the terminal.

For this type of codebook, the terminal needs to feed back a characteristic subspace beam (whose long-period reporting amount is a matrix B in FIG. 4) in a long period and feed back a beam superposition coefficient (a matrix $C_2$ in FIG. 4) in a short period. If each element of the characteristic subspace beam is directly fed back in a long period in a scalar quantization manner (that is, each value of the matrix B is fed back to the access network device), feedback overheads are high.

However, when a uniform projection quantization solution in the background is used to feed back the long-period reporting amount, recovery precision of the characteristic subspace beam is limited, and precision of the PMI is affected.

To resolve the foregoing problem, this application provides a channel state information feedback solution. The terminal divides a beam set into two parts based on an energy difference between characteristic subspace beams. Some beams with high energy are represented by a linear combination with more DFT base vectors, and some beams with low energy are represented by a linear combination with fewer DFT base vectors. When overheads are fixed, overall precision of beam quantization projection is improved. This improves precision of PMI feedback, or reduces overheads while minimizing performance losses.

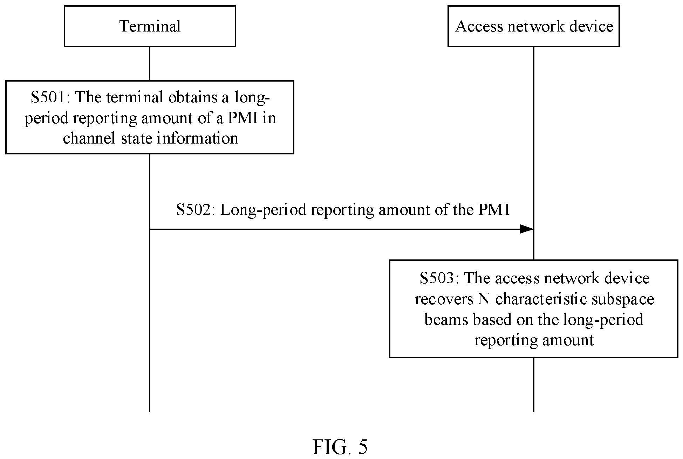

FIG. 5 is a schematic flowchart of a channel state information feedback method according to an embodiment of this application. The method may include the following steps.

S501: A terminal obtains a long-period reporting amount of a PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers, and the long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors.

It is assumed that there are $N$ characteristic subspace beams, and a dimension of each characteristic subspace beam is P × 1 . There is generally an energy difference between characteristic subspace beams. In this embodiment, the $N$ characteristic subspace beams are divided into at least two groups. For example, the $N$ characteristic subspace beams are divided into two groups: a first group of beams include $N_1$ characteristic subspace beams with high energy, and a second group of beams include $N_2$ characteristic subspace beams with low energy.

In Example A, the $N_1$ characteristic subspace beams are represented by the linear combination of the $M_1$ DFT base vectors in the first group of DFT base vectors, and the $N_2$ characteristic subspace beams are represented by the linear combination of the $M_2$ DFT base vectors in the second group of DFT base vectors, where $N$, $N_1$, $N_2$, $M_1$, and $M_2$ are all positive integers, and $M_1 > M_2$. Non-uniform quantization is implemented in a beam grouping manner, so that overall precision of beam quantization projection can be improved.

A DFT base vector universal set corresponding to the $N$ characteristic subspace beams includes P DFT base vectors, and the first group of DFT base vectors include $M_1$ DFT base vectors in the P DFT base vectors. The second group of DFT base vectors include the P DFT base vectors or $M_2$ DFT base vectors in the $M_1$ DFT base vectors. Therefore, the indication information of the $M_1$ DFT base vectors, the indication information of the $M_2$ DFT base vectors, the linear combination coefficient of the $M_1$ DFT base vectors, and the linear combination coefficient of the $M_2$ DFT base vectors included in the long-period reporting amount are obtained.

In Example B, alternatively, the first group of beams may include $N_1$ characteristic subspace beams with weak energy, the second group of beams include $N_2$ characteristic subspace beams with high energy, the $N_1$ characteristic subspace beams are represented by the linear combination of the $M_1$ DFT base vectors in the first group of DFT base vectors, and the $N_2$ characteristic subspace beams are represented by the linear combination of the $M_2$ DFT base vectors in the second group of DFT base vectors. In this case, $M_1 < M_2$.

A DFT base vector universal set corresponding to the $N$ characteristic subspace beams includes P DFT base vectors, and the first group of DFT base vectors include the P DFT base vectors or the $M_1$ DFT base vectors in the $M_2$ DFT base vectors. The second group of DFT base vectors include $M_2$ DFT base vectors in the P DFT base vectors. Therefore, the indication information of the $M_1$ DFT base vectors, the indication information of the $M_2$ DFT base vectors, the linear combination coefficient of the $M_1$ DFT base vectors, and the linear combination coefficient of the $M_2$ DFT base vectors included in the long-period reporting amount are obtained.

Example A is used as an example in the following descriptions. For a specific implementation of Example B, refer to the implementation of Example A. Details are not described again in this application.

S502: The terminal sends the long-period reporting amount of the PMI to an access network device. Correspondingly, the access network device receives the long-period reporting amount.

After obtaining the long-period reporting amount of the PMI, the terminal sends the long-period reporting amount of the PMI to the access network device.

The terminal divides a beam set into two groups based on an energy difference between characteristic subspace beams. Some beams with high energy are represented by a linear combination with more DFT base vectors, and some beams with low energy are represented by a linear combination with fewer DFT base vectors. Therefore, when overheads are fixed, overall precision of beam quantization projection is improved. This improves precision of PMI feedback, or reduces overheads while minimizing performance losses.

S503: The access network device recovers the $N$ characteristic subspace beams based on the long-period reporting amount.

The access network device receives the long-period reporting amount of the PMI sent by the terminal, and may recover the $N$ characteristic subspace beams based on the long-period reporting amount.

According to the channel state information feedback method provided in this embodiment of this application, the terminal divides the beam set into two parts based on the energy difference between the characteristic subspace beams. Some beams with high energy are represented by the linear combination with more DFT base vectors, and some beams with low energy are represented by the linear combination with fewer DFT base vectors. When the overheads are fixed, overall precision of beam quantization projection is improved. This improves precision of PMI feedback, or reduces the overheads while minimizing the performance losses.

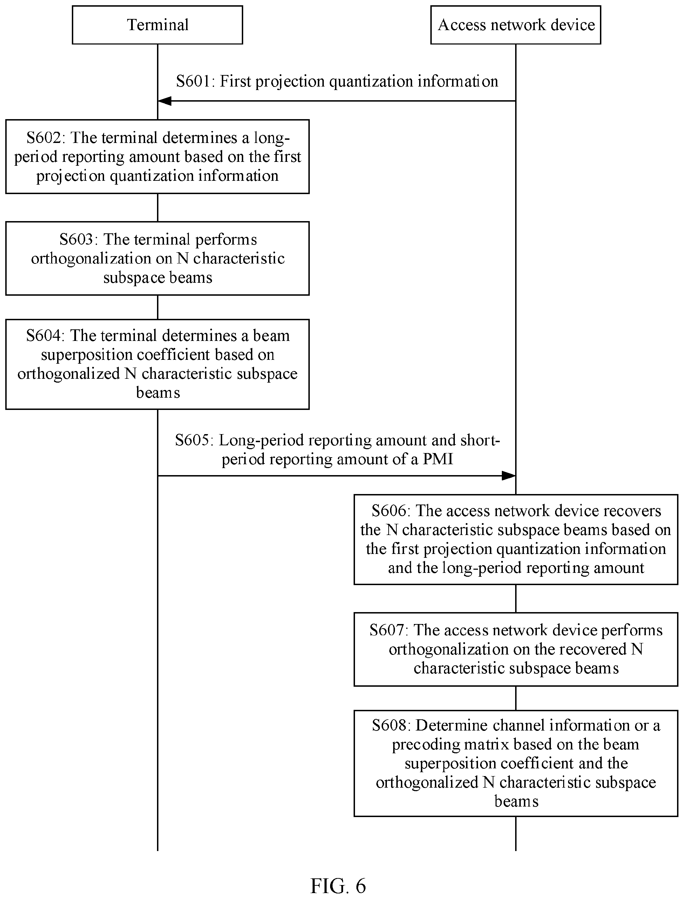

FIG. 6 is a schematic flowchart of another channel state information feedback method according to an embodiment of this application. The method may include the following steps.

S601: An access network device sends first projection quantization information to a terminal. The first projection quantization information includes at least one of the following: first characteristic subspace beam grouping information, first DFT base vector selection range information, and first DFT base vector quantity information.

Correspondingly, the terminal receives the first projection quantization information.

When determining a long-period reporting amount of a PMI, the terminal needs to perform non-uniform projection quantization on $N$ characteristic subspace beams. The terminal needs to perform non-uniform projection quantization based on projection quantization information, to determine the long-period reporting amount.

In this embodiment, the projection quantization information may be configured by the access network device. Specifically, the access network device sends the first projection quantization information to the terminal, and the terminal receives the first projection quantization information. The first projection quantization information includes at least one of the following: the first characteristic subspace beam grouping information, the first DFT base vector selection range information, and the first DFT base vector quantity information. For example, the access network device may send the first projection quantization information by using one or more of radio resource control (radio resource control, RRC) signaling, a medium access control-control element (medium access control-control element, MAC-CE), downlink control information (downlink control information, DCI), and the like.

In another embodiment, the terminal may alternatively report the projection quantization information to the access network device. Specifically, the terminal sends second projection quantization information to the access network device, and the access network device receives the second projection quantization information. The second projection quantization information includes at least one of the following: second characteristic subspace beam grouping information, second DFT base vector selection range information, and second DFT base vector quantity information. Information included in the second projection quantization information may be complementary to the first projection quantization information. A meaning of each piece of information in the second projection quantization information is the same as that of the first projection quantization information. The second projection quantization information is described in the following descriptions.

The first characteristic subspace beam grouping information indicates how to group characteristic subspace beams. It is assumed that there are $N$ characteristic subspace beams. In this embodiment, the $N$ characteristic subspace beams are divided into at least two groups. For example, the $N$ characteristic subspace beams are divided into two groups: a first group of beams include $N_1$ characteristic subspace beams with high energy, and a second group of beams include $N_2$ characteristic subspace beams with low energy. The first characteristic subspace beam grouping information includes:

$N$ and $N_1$;

N and a beam ratio β;

N; or

$N_1$ and $N_2$.

To be specific, if the access network device may indicate the total quantity N of characteristic subspace beams and the quantity $N_1$ of beams in the first group of beams, the terminal may determine, based on configured N and $N_1$, that the quantity of beams in the second group of beams is $N_2 = N - N_1$;

if the access network device may indicate the total quantity N of characteristic subspace beams and the beam ratio β, the terminal may determine

$$N_1 = \lfloor \beta * N \rfloor \text{ or } \lceil \beta * N \rceil \text{ and } N_2 = N - N_1$$

based on configured N and β;

if the access network device may indicate the total quantity N of characteristic subspace beams, the beam ratio β may be predefined in a protocol, or the second characteristic subspace beam grouping information may include the beam ratio β, the terminal may determine $N_1 = \lfloor \beta * N \rfloor$ or $\lceil \beta * N \rceil$ and $N_2 = N - N_1$ based on configured N and the beam ratio β;

if the access network device may indicate the quantity $N_1$ of beams in the first group of beams and the quantity $N_2$ of beams in the second group of beams, the terminal may directly obtain $N_1$ and $N_2$; or

if the access network device may indicate the total quantity N of characteristic subspace beams, the second characteristic subspace beam grouping information may include one or more of quantities $N_1$ and $N_2$ of characteristic subspace beams obtained after grouping.

⌊ ⌋ indicates rounding down, and ⌈ ⌉ indicates rounding up.

When non-uniform projection quantization is performed, based on different selection of a second group of DFT base vectors, there may be the following two DFT base vector selection ranges: the second group of DFT base vectors is a subset of a first group of DFT base vectors; or the second group of DFT base vectors is not a subset of a first group of DFT base vectors.

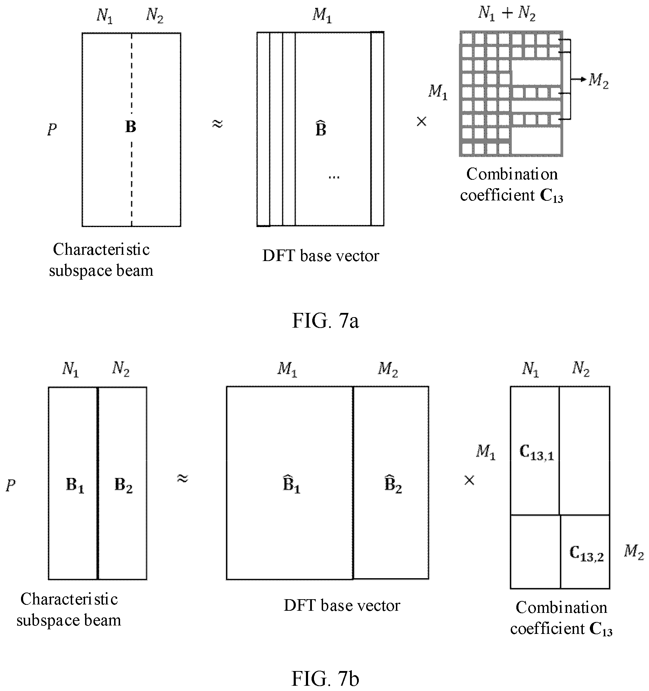

FIG. 7a is a diagram of a non-uniform projection quantization solution of a characteristic subspace beam according to an embodiment of this application. In this example, the second group of DFT base vectors is the subset of the first group of DFT base vectors. A DFT base vector universal set corresponding to the N characteristic subspace beams (for example, a matrix B in FIG. 7a) includes P DFT base vectors, and the first group of DFT base vectors include $M_1$ DFT base vectors (for example, a matrix $\hat{B}$ in FIG. 7a) in the P DFT base vectors. The second group of DFT base vectors include $M_2$ DFT base

vectors in the $M_1$ DFT base vectors.

FIG. 7b is a diagram of another non-uniform projection quantization solution of a characteristic subspace beam according to an embodiment of this application. In this example, the second group of DFT base vectors is not the subset of the first group of DFT base vectors. A DFT base vector universal set corresponding to the N characteristic subspace beams (for example, matrixes $B_1+B_2$ in FIG. 7b) includes P DFT base vectors, and the first group of DFT base vectors include $M_1$ DFT base

vectors (for example, a matrix $\widehat{B_1}$ in FIG. 7b) in the P DFT base vectors. The second group of DFT base vectors include $M_2$ DFT base vectors (for example, a matrix

$\widehat{B_2}$ in FIG. 7b) in the P DFT base vectors. For example, the second group of DFT base vectors may have an intersection with or may not have an intersection with the first group of DFT base vectors.

Therefore, the first DFT base vector selection range information may indicate that the second group of DFT base vectors is the subset of the first group of DFT base vectors, or that the second group of DFT base vectors is not the subset of the first group of DFT base vectors; or

the protocol may predefine that the second group of DFT base vectors is the subset of the first group of DFT base vectors, or that the second group of DFT base vectors is not the subset of the first group of DFT base vectors; or

the second DFT base vector selection range information may indicate that the second group of DFT base vectors is the subset of the first group of DFT base vectors, or that the second group of DFT base vectors is not the subset of the first group of DFT base vectors.

The first DFT base vector quantity information indicates a quantity of DFT base vectors in the first group of DFT base vectors and a quantity of DFT base vectors in the second group of DFT base vectors. For example, the first DFT base vector quantity information may include:

$M_1$ and a base vector quantity ratio δ;

$M_1$; or

$M_1$ and $M_2$.

To be specific, if the access network device indicates the quantity $M_1$ of DFT base vectors in the first group of DFT base vectors and the base vector quantity ratio δ, the terminal may determine $M_2 = \lfloor \delta * M_1 \rfloor$

or $\lceil \delta * M_1 \rceil$ based on $M_1$ and δ; or

if the access network device indicates the quantity $M_1$ of DFT base vectors in the first group of DFT base vectors, and the base vector quantity ratio $\delta$ is predefined in the protocol or

the second DFT base vector quantity information indicates the base vector quantity ratio $\delta$, the terminal may determine $M_2 = \lfloor \delta * M_1 \rfloor$ or $\lceil \delta * M_1 \rceil$ based on $M_1$ and $\delta$; or

if the access network device indicates the quantity $M_1$ of DFT base vectors in the first group of DFT base vectors and the quantity $M_2$ of DFT base vectors in the second group of DFT base vectors, the terminal may directly obtain $M_1$ and $M_2$; or

the terminal indicates the quantity $M_1$ of DFT base vectors in the first group of DFT base vectors and the quantity $M_2$ of DFT base vectors in the second group of DFT base vectors in the second DFT base vector quantity information.

$\lfloor \ \rfloor$ indicates rounding down, and $\lceil \ \rceil$ indicates rounding up.

S602: The terminal determines the long-period reporting amount based on the first projection quantization information.

After obtaining the first projection quantization information, the terminal may determine the long-period reporting amount based on the first projection quantization information.

Specifically, non-uniform projection quantization is performed based on the first projection quantization information to obtain the long-period report amount.

In another embodiment, the terminal may further send the second projection quantization information to the access network device, and the terminal may determine the long-period reporting amount based on the first projection quantization information and the second projection quantization information.

For a specific implementation of this step, refer to step S501 in the foregoing embodiment.

The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors.

The $M_1$ DFT base vectors and the $M_2$ DFT base vectors have different indication information based on different DFT base vector selection ranges (or referred to as different non-uniform projection quantization solutions).

In a case, the second group of DFT base vectors is the subset of the first group of DFT base vectors. Correspondingly, the $M_1$ DFT base vectors and the $M_2$ DFT base vectors may be indicated in the following two manners:

In an implementation, the $M_1$ DFT base vectors

and the $M_2$ DFT base vectors are indicated by using a combinatorial number.

It is assumed that a dimension of a characteristic subspace beam is P × 1, a corresponding DFT base vector universal set includes P DFT base vectors, and the indication information of the $M_1$ DFT base vectors indicates one of a plurality of first base vector groups selected from the P DFT base vectors. The first base vector group includes $M_1$ base vectors. For example, if the corresponding DFT base vector universal set includes four DFT base vectors and $M_1$ = 3, there may be C4 first base vector groups, and the $M_1$ base vectors may belong to any one of the C4 first base vector groups. C indicates permutation and combination.

The indication information of the $M_2$ DFT base vectors indicates one of a plurality of second base vector groups selected from the $M_1$ DFT base vectors. The second base vector group includes $M_2$ base vectors. For example, if $M_2$ = 2, there may be $C_3^2$ second base vector groups, and the $M_2$ base vectors may belong to any one of the $C_3^2$ second base vector groups.

The $M_1$ DFT base vectors and the $M_2$ DFT base vectors need to be indicated by using $\lceil \log_2(C_P^{M_1}) + \log_2(C_{M_1}^{M_2}) \rceil$ bits in total.

In another implementation, the $M_1$ DFT base vectors are indicated by using a first bitmap, the first bitmap includes P bits, bit values corresponding to the selected $M_1$ DFT base vectors are first values, and bit values corresponding to unselected $(P - M_1)$ DFT base vectors are second values. The $M_2$ DFT base vectors are indicated by using a second bitmap, the second bitmap includes $M_1$ bits, bit values corresponding to the selected $M_2$ DFT base vectors are first values, and bit values corresponding to unselected $(M_1 - M_2)$ DFT base vectors are second values.

The $M_1$ DFT base vectors and the $M_2$ DFT base vectors need to be indicated by using $(P + M_1)$ bits in total.

In another case, the second group of DFT base vectors is not the subset of the first group of DFT base vectors. Correspondingly, the $M_1$ DFT base vectors and the $M_2$ DFT base vectors may be indicated in the following two manners:

In an implementation, it is assumed that a dimension of a characteristic subspace beam is P×1, a corresponding DFT base vector universal set includes P DFT base vectors, and the indication information of the $M_1$ DFT base vectors indicates one of a plurality of third base vector groups selected from the P DFT base vectors. The third base vector group includes $M_1$ base vectors. For example, if the corresponding DFT base vector universal set includes four DFT base vectors, and $M_1$ = 3, there may be $C_4^3$ third base vector groups, and the

$M_1$ base vectors may belong to any one of the $C_4^3$ third base vector groups.

The indication information of the $M_2$ DFT base vectors indicates one of a plurality of fourth base vector groups selected from the P DFT base vectors. The fourth base vector group includes $M_2$ base vectors. For example, if the corresponding DFT base vector universal set includes four DFT base vectors and $M_2 = 2$, there may be $C_4^2$ fourth base vector groups, and the $M_2$ base vectors may belong to any one of the $C_4^2$ fourth base vector groups.

The $M_1$ DFT base vectors and the $M_2$ DFT base vectors need to be indicated by using

$$[\log_2(C_P^{M_1}) + \log_2(C_P^{M_2})]$$

bits in total.

In another implementation, the $M_1$ DFT base vectors are indicated by using a third bitmap, the third bitmap includes P bits, bit values corresponding to the selected $M_1$ DFT base vectors are first values, and bit values corresponding to unselected $(P - M_1)$ DFT base vectors are second values.

The $M_2$ DFT base vectors are indicated by using a fourth bitmap, the fourth bitmap includes P bits, bit values corresponding to the selected $M_2$ DFT base vectors are first values, and bit values corresponding to unselected $(P-M_2)$ DFT base vectors are second values.

The $M_1$ DFT base vectors and the $M_2$ DFT base vectors need to be indicated by using 2P bits in total.

The first value may be "1", and indicates that the DFT base vector is selected; and the second value may be "0", and indicates that the DFT base vector is not selected. Alternatively, the first value may be "0", and indicates that the DFT base vector is selected; and the second value may be "1", and indicates that the DFT base vector is not selected. This is not limited in this application. There are $N_1 M_1$ linear combination coefficients of the $M_1$ DFT base vectors, and there are $N_2 M_2$ linear combination coefficients of the $M_2$ DFT base vectors.

S603: The terminal performs orthogonalization on the N characteristic subspace beams.

The terminal determines and feeds back the long-period reporting amount of the PMI, and may further determine and feed back a short-period reporting amount of the PMI. The short-period reporting amount includes a beam superposition coefficient. The long-period reporting amount and the short-period reporting amount are used to determine channel information or a precoding matrix, and the channel information or the precoding matrix is represented by linear superposition of the N characteristic subspace beams.

However, for quantization feedback of the characteristic subspace beam, both uniform projection quantization and non-uniform projection quantization are lossy quantization manners. Originally, characteristic subspace beams are orthogonal to each other. After beam projection is quantized through DFT base vector projection, the terminal reports indication information and a linear combination coefficient of the DFT base vector, and a characteristic subspace beam group recovered by the access network device based on the long-period reporting amount from the terminal is lossy quantized. As a result, beams are not orthogonal. Downlink channel information or a main eigenvector represented by a linear/bilinear combination of non-orthogonal quantized characteristic subspace beams causes a decrease in precision, thereby causing performance losses. In this embodiment, the terminal and the access network device may predefine a quantized characteristic subspace beam group orthogonalization method, including but not limited to orthogonal triangle (orthogonal triangle, QR) decomposition, Schmidt orthogonalization, and the like.

After obtaining the long-period reporting amount of the characteristic subspace beam and feeding back the long-period reporting amount, the terminal may further perform orthogonalization on the N characteristic subspace beams according to the foregoing predefined orthogonalization method. S604: The terminal determines the beam superposition coefficient based on orthogonalized N characteristic subspace beams.

After performing orthogonalization on the N characteristic subspace beams, the terminal determines the beam superposition coefficient based on the orthogonalized N characteristic subspace beams. For example, the terminal determines a beam linear combination coefficient in a short period based on the quantized and orthogonalized beams and the downlink channel information or the main eigenvector, and reports the beam linear combination coefficient in a short period.

S605: The terminal sends the long-period reporting amount and the short-period reporting amount of the PMI to the access network device.

Correspondingly, the access network device receives the long-period reporting amount and the short-period reporting amount.

S606: The access network device recovers the N characteristic subspace beams based on the first projection quantization information and the long-period reporting amount.

After receiving the long-period reporting amount reported by the terminal, the access network device may recover the quantized characteristic subspace beam based on the long-period reporting amount and a codebook structure predefined in a protocol.

S607: The access network device performs orthogonalization on the recovered N characteristic subspace beams.

After recovering the quantized characteristic subspace beam, the access network device may perform orthogonalization on the recovered characteristic subspace beam according to the orthogonalization method predefined in the protocol.

S608: The access network device determines the channel information or the precoding matrix based on the beam superposition coefficient and the orthogonalized $N$ characteristic subspace beams.

The access network device obtains, based on the quantized and orthogonalized beam, the short-period reporting amount fed back by the terminal, and the codebook structure predefined in the protocol, the downlink channel information or the main eigenvector that the terminal wants to feed back.

According to the channel state information feedback method provided in this embodiment of this application, the terminal divides a beam set into two parts based on an energy difference between characteristic subspace beams. Some beams with high energy are represented by a linear combination with more DFT base vectors, and some beams with low energy are represented by a linear combination with fewer DFT base vectors. When overheads are fixed, overall precision of beam quantization projection is improved. This improves precision of PMI feedback, or reduces overheads while minimizing performance losses.

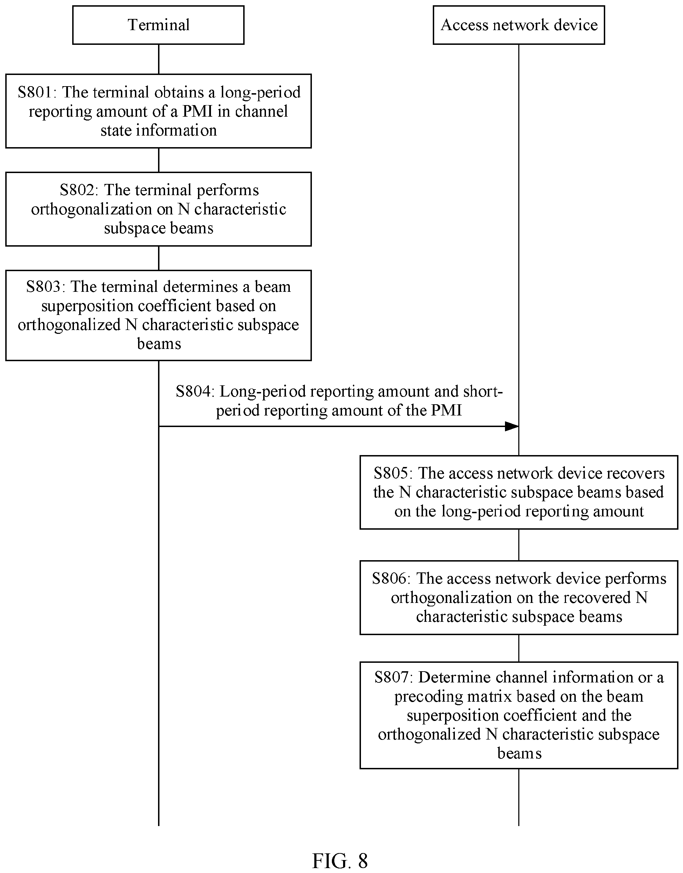

FIG. 8 is a schematic flowchart of still another channel state information feedback method according to an embodiment of this application. The method may include the following steps.

S801: A terminal obtains a long-period reporting amount of a PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers, and the long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors.

For a specific implementation of this step, refer to step S501 or S602 in the foregoing embodiment. Details are not described herein again.

S802: The terminal performs orthogonalization on the $N$ characteristic subspace beams.

For a specific implementation of this step, refer to step S603 in the foregoing embodiment.

S803: The terminal determines a beam superposition coefficient based on orthogonalized $N$ characteristic subspace beams. A short-period reporting amount includes the beam superposition coefficient. The long-period reporting amount and the short-period reporting amount are used to determine channel information or a precoding matrix, and the channel information or the precoding matrix is represented by linear superposition of the $N$ characteristic subspace beams.

For a specific implementation of this step, refer to step S604 in the foregoing embodiment. S804: The terminal sends the long-period reporting amount and the short-period reporting amount of the PMI to an access network device.

For a specific implementation of this step, refer to step S605 in the foregoing embodiment. Correspondingly, the access network device receives the long-period reporting amount and the short-period reporting amount of the PMI.

S805: The access network device recovers the $N$ characteristic subspace beams based on the long-period reporting amount.

For a specific implementation of this step, refer to step S606 in the foregoing embodiment. S806: The access network device performs orthogonalization on the recovered $N$ characteristic subspace beams.

For a specific implementation of this step, refer to step S607 in the foregoing embodiment. S807: The access network device determines the channel information or the precoding matrix based on the beam superposition coefficient and the orthogonalized $N$ characteristic subspace beams.

For a specific implementation of this step, refer to step S608 in the foregoing embodiment.

According to the channel state information feedback method provided in this embodiment of this application, the terminal feeds back the long-period reporting amount and the short-period reporting amount of the PMI. The access network device receives the long-period reporting amount and the short-period reporting amount of the PMI that are fed back by the terminal, and determines the channel information or the precoding matrix based on the long-period reporting amount and the short-period reporting amount.

It may be understood that, to implement functions in the foregoing embodiments, the access network device and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

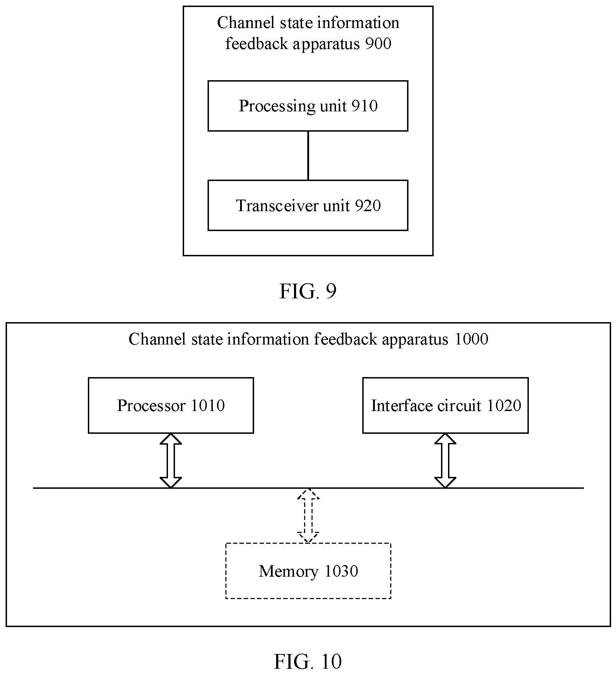

FIG. 9 and FIG. 10 are diagrams of structures of possible channel state information feedback apparatuses according to embodiments of this application. The channel state information feedback apparatuses may be configured to implement functions of the terminal or the access network device in the foregoing method embodiments. Therefore, beneficial effect of the foregoing method embodiments can also be implemented. In this embodiment of this application, the channel state information feedback apparatus may be one of the terminals 120a to 120j shown in FIG. 2, or may be the access network device 110a or 110b shown in FIG. 2, or may be a module (like a chip) used in the terminal or the access network device.

As shown in FIG. 9, a channel state information feedback apparatus 900 includes a processing unit 910 and a transceiver unit 920. The channel state information feedback apparatus 900 may be configured to implement functions of the terminal or the access network device in the method embodiment shown in FIG. 5, FIG. 6, or FIG. 8.

When the channel state information feedback apparatus 900 is configured to implement the functions of the terminal in the method embodiment shown in FIG. 5 or FIG. 6, the processing unit 910 is configured to obtain a long-period reporting amount of a precoding matrix indicator PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N, N_1, N_2, M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The transceiver unit 920 is configured to send the long-period reporting amount of the PMI.

Optionally, the transceiver unit 920 is further configured to receive first projection quantization information. The first projection quantization information includes at least one of the following: first characteristic subspace beam grouping information, first DFT base vector selection range information, and first DFT base vector quantity information. The processing unit 910 is configured to determine the long-period reporting amount based on the first projection quantization information.

Optionally, the transceiver unit 920 is further configured to send second projection quantization information. The second projection quantization information includes at least one of the following: second characteristic subspace beam grouping information, second DFT base vector selection range information, and second DFT base vector quantity information. The processing unit 910 is further configured to determine the long-period reporting amount based on the first projection quantization information and the second projection quantization information.

Optionally, the processing unit 910 is further configured to determine a short-period reporting amount of the PMI. The short-period reporting amount includes a beam superposition coefficient, and the long-period reporting amount and the short-period reporting amount are used to determine channel information or a precoding matrix. The channel information or the precoding matrix is represented by linear superposition of the $N$ characteristic subspace beams. The transceiver unit 920 is further configured to send the short-period reporting amount of the PMI.

Optionally, the processing unit 910 is further configured to perform orthogonalization on the $N$ characteristic subspace beams. The processing unit 910 is further configured to determine the beam superposition coefficient based on orthogonalized $N$ characteristic subspace beams.

When the channel state information feedback apparatus 900 is configured to implement the functions of the access network device in the method embodiment shown in FIG. 5 or FIG. 6, the transceiver unit 920 is configured to receive a long-period reporting amount of a precoding matrix indicator PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N, N_1, N_2, M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The processing unit 910 is configured to recover the $N$ characteristic subspace beams based on the long-period reporting amount.

Optionally, the transceiver unit 920 is further configured to send first projection quantization information. The first projection quantization information includes at least one of the following: first characteristic subspace beam grouping information, first DFT base vector selection range information, and first DFT base vector quantity information. The processing unit 910 is configured to recover the $N$ characteristic subspace beams based on the first projection quantization information and the long-period reporting amount.

Optionally, the transceiver unit 920 is further configured to receive second projection quantization information. The second projection quantization information includes at least one of the following: second characteristic subspace beam grouping information, second DFT base vector selection range information, and second DFT base vector quantity information. The processing unit 910 is further configured to recover the $N$ characteristic subspace beams based on the first projection quantization information, the second projection quantization information, and the long-period reporting amount.

Optionally, the transceiver unit 920 is further configured to receive a short-period reporting amount of the PMI. The short-period reporting amount includes a beam superposition coefficient. The processing unit 910 is further configured to determine channel information or a precoding matrix based on the short-period reporting amount and the long-period reporting amount. The channel information or the precoding matrix is represented by linear superposition of the $N$ characteristic subspace beams.

Optionally, the processing unit 910 is further configured to perform orthogonalization on the recovered $N$ characteristic subspace beams. The processing unit 910 is further configured to determine the channel information or the precoding matrix based on the beam superposition coefficient and the orthogonalized $N$ characteristic subspace beams.

When the channel state information feedback apparatus 900 is configured to implement the functions of the terminal in the method embodiment shown in FIG. 8, the processing unit 910 is configured to obtain a long-period reporting amount of a precoding matrix indicator PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The processing unit 910 is further configured to determine a short-period reporting amount of the PMI. The short-period reporting amount includes a beam superposition coefficient, the long-period reporting amount and the short-period reporting amount are used to determine channel information or a precoding matrix, and the channel information or the precoding matrix is represented by linear superposition of the $N$ characteristic subspace beams. The transceiver unit 920 is configured to send the long-period reporting amount and the short-period reporting amount of the PMI.

Optionally, the processing unit 910 is further configured to perform orthogonalization on the $N$ characteristic subspace beams. The processing unit 910 is further configured to determine the beam superposition coefficient based on the orthogonalized $N$ characteristic subspace beams.

When the channel state information feedback apparatus 900 is configured to implement the functions of the access network device in the method embodiment shown in FIG. 8, the transceiver unit 920 is configured to receive a long-period reporting amount of a precoding matrix indicator PMI in channel state information. The long-period reporting amount is used to determine $N$ characteristic subspace beams, the $N$ characteristic subspace beams include $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, where $N$, $N_1$, $N_2$, $M_1$, and $M_2$ are all positive integers. The long-period reporting amount includes indication information of the $M_1$ DFT base vectors, indication information of the $M_2$ DFT base vectors, a linear combination coefficient of the $M_1$ DFT base vectors, and a linear combination coefficient of the $M_2$ DFT base vectors. The transceiver unit 920 is further configured to receive a short-period reporting amount of the PMI, and the short-period reporting amount includes a beam superposition coefficient. The processing unit 910 is configured to recover the $N$ characteristic subspace beams based on the long-period reporting amount. The processing unit 910 is further configured to determine channel information or a precoding matrix based on the short-period reporting amount and the long-period reporting amount, and the channel information or the precoding matrix is represented by linear superposition of the $N$ characteristic subspace beams. Optionally, the processing unit 910 is further configured to perform orthogonalization on the recovered $N$ characteristic subspace beams. The processing unit 910 is further configured to determine the channel information or the precoding matrix based on the beam superposition coefficient and the orthogonalized $N$ characteristic subspace beams.

For more detailed descriptions of the processing unit 910 and the transceiver unit 920, directly refer to related descriptions in the method embodiment shown in FIG. 5, FIG. 6, or FIG. 8. Details are not described herein.

As shown in FIG. 10, a channel state information feedback apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the channel state information feedback apparatus 1000 may further include a memory 1030, configured to store instructions to be executed by the processor 1010, store input data required for running the instructions by the processor 1010, or store data generated after the processor 1010 runs the instructions.

When the channel state information feedback apparatus 1000 is configured to implement the method shown in FIG. 5, FIG. 6, or FIG. 8, the processor 1010 is configured to perform functions of the processing unit 910, and the interface circuit 1020 is configured to perform functions of the transceiver unit 920.

When the channel state information feedback apparatus is a chip used in the terminal, the chip in the terminal implements functions of the terminal in the foregoing method embodiments. The chip in the terminal receives information from another module (for example, a radio frequency module or an antenna) in the terminal, where the information is sent by the access network device to the terminal; or the chip in the terminal sends information to another module (for example, a radio frequency module or an antenna) in the terminal, where the information is sent by the terminal to the access network device.

When the channel state information feedback apparatus is a chip used in the access network device, the chip in the access network device implements functions of the access network device in the foregoing method embodiments. The chip in the access network device receives information from another module (for example, a radio frequency module or an antenna) in the access network device, where the information is sent by the terminal to the access network device; or the chip in the access network device sends information to another module (for example, a radio frequency module or an antenna) in the access network device, where the information is sent by the access network device to the terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the access network device or the terminal. Certainly, the processor and the storage medium may exist in the access network device or the terminal as discrete components. All or some of the foregoing embodiments may be implemented by using software, hardware, firmware, or any combination thereof. When software is used to implement embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, an access network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases:

Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A channel state information feedback method, wherein the method comprises:

obtaining a long-period reporting amount of a precoding matrix indicator PMI in channel state information, wherein the long-period reporting amount is used to determine $N$ characteristic subspace beams, the $N$ characteristic subspace beams comprise $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, wherein $N$, $N_1$, $N_2$, $M_1$, and $M_2$ are all positive integers, and the long-period reporting amount comprises indication information of the $M_1$ DFT base vectors, indication information of the $M_2$ DFT base vectors, a linear combination coefficient of the $M_1$ DFT base vectors, and a linear combination coefficient of the $M_2$ DFT base vectors; and sending the long-period reporting amount of the PMI.

2. The method according to claim 1, wherein the method further comprises:

receiving first projection quantization information, wherein the first projection quantization information comprises at least one of the following: first characteristic subspace beam grouping information, first DFT base vector selection range information, and first DFT base vector quantity information; and determining the long-period reporting amount based on the first projection quantization information.

3. The method according to claim 2, wherein the method further comprises:

sending second projection quantization information, wherein the second projection quantization information comprises at least one of the following: second characteristic subspace beam grouping information, second DFT base vector selection range information, and second DFT base vector quantity information; and determining the long-period reporting amount based on the first projection quantization information and the second projection quantization information.

4. The method according to any one of claims 1 to 3, wherein the method further comprises:

determining a short-period reporting amount of the PMI, wherein the short-period reporting amount comprises a beam superposition coefficient, the long-period reporting amount and the short-period reporting amount are used to determine channel information or a precoding matrix, and the channel information or the precoding matrix is represented by linear superposition of the $N$ characteristic subspace beams; and sending the short-period reporting amount of the PMI.

5. The method according to claim 4, wherein before the sending the short-period reporting amount of the PMI, the method further comprises:

performing orthogonalization on the $N$ characteristic subspace beams; and determining the beam superposition coefficient based on orthogonalized $N$ characteristic subspace beams.

6. The method according to claim 2, wherein the first characteristic subspace beam grouping information comprises:

$N$ and $N_1$;
$N$ and a beam ratio $\beta$;
$N$; or
$N_1$ and $N_2$.

7. The method according to claim 2, wherein the first DFT base vector selection range information indicates that the second group of DFT base vectors is a subset of the first group of DFT base vectors.

8. The method according to claim 7, wherein the $M_1$ DFT base vectors and the $M_2$ DFT base vectors are indicated by using a combinatorial number;

a dimension of the characteristic subspace beam is $P \times 1$, a corresponding DFT base vector universal set comprises P DFT base vectors, and the indication information of the $M_1$ DFT base vectors indicates one of a plurality of first base vector groups selected from the P DFT base vectors, wherein the first base vector group comprises $M_1$ base vectors; and the indication information of the $M_2$ DFT base

vectors indicates one of a plurality of second base vector groups selected from the $M_1$ DFT base vectors, wherein the second base vector group comprises $M_2$ base vectors.

9. The method according to claim 7, wherein the $M_1$ DFT base vectors are indicated by using a first bitmap, the first bitmap comprises P bits, bit values corresponding to the selected $M_1$ DFT base vectors are first values, and bit values corresponding to unselected $(P - M_1)$ DFT base vectors are second values; and
the $M_2$ DFT base vectors are indicated by using a second bitmap, the second bitmap comprises $M_1$ bits, bit values corresponding to the selected $M_2$ DFT base vectors are first values, and bit values corresponding to unselected $(M_1 - M_2)$ DFT base vectors are second values.

10. The method according to claim 2, wherein the first DFT base vector selection range information indicates that the second group of DFT base vectors is not a subset of the first group of DFT base vectors.

11. The method according to claim 10, wherein a dimension of the characteristic subspace beam is P×1, a corresponding DFT base vector universal set comprises P DFT base vectors, the indication information of the $M_1$ DFT base vectors indicates one of a plurality of third base vector groups selected from the P DFT base vectors, wherein the third base vector group comprises $M_1$ base vectors; and
the indication information of the $M_2$ DFT base vectors indicates one of a plurality of fourth base vector groups selected from the P DFT base vectors, wherein the fourth base vector group comprises $M_2$ base vectors.

12. The method according to claim 10, wherein the $M_1$ DFT base vectors are indicated by using a third bitmap, the third bitmap comprises P bits, bit values corresponding to the selected $M_1$ DFT base vectors are first values, and bit values corresponding to unselected $(P - M_1)$ DFT base vectors are second values; and
the $M_2$ DFT base vectors are indicated by using a fourth bitmap, the fourth bitmap comprises P bits, bit values corresponding to the selected $M_2$ DFT base vectors are first values, and bit values corresponding to unselected $(P - M_2)$ DFT base vectors are second values.

13. The method according to claim 2, wherein the first DFT base vector quantity information comprises:

$M_1$ and a base vector quantity ratio $\delta$;
$M_1$; or
$M_1$ and $M_2$.

14. A channel state information feedback method, wherein the method comprises:

receiving a long-period reporting amount of a precoding matrix indicator PMI in channel state information, wherein the long-period reporting amount is used to determine $N$ characteristic subspace beams, the $N$ characteristic subspace beams comprise $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, wherein $N, N_1, N_2, M_1,$ and $M_2$ are all positive integers, and the long-period reporting amount comprises indication information of the $M_1$ DFT base vectors, indication information of the $M_2$ DFT base vectors, a linear combination coefficient of the $M_1$ DFT base vectors, and a linear combination coefficient of the $M_2$ DFT base vectors; and
recovering the $N$ characteristic subspace beams based on the long-period reporting amount.

15. The method according to claim 14, wherein the method further comprises:

sending first projection quantization information, wherein the first projection quantization information comprises at least one of the following: first characteristic subspace beam grouping information, first DFT base vector selection range information, and first DFT base vector quantity information; and
the recovering the $N$ characteristic subspace beams based on the long-period reporting amount comprises:
recovering the $N$ characteristic subspace beams based on the first projection quantization information and the long-period reporting amount.

16. The method according to claim 15, wherein the method further comprises:

receiving second projection quantization information, wherein the second projection quantization information comprises at least one of the following: second characteristic subspace beam grouping information, second DFT base vector selection range information, and second DFT base vector quantity information; and
the recovering the $N$ characteristic subspace beams based on the long-period reporting amount comprises:
recovering the $N$ characteristic subspace beams based on the first projection quantization information, the second projection quantization information, and the long-period reporting amount.

17. The method according to any one of claims 14 to 16, wherein the method further comprises:

receiving a short-period reporting amount of the PMI, wherein the short-period reporting amount comprises a beam superposition coefficient; and
determining channel information or a precoding matrix based on the short-period reporting amount and the long-period reporting amount, wherein the channel information or the precoding matrix is represented by linear superposition of the $N$ characteristic subspace beams.

18. The method according to claim 17, wherein after the recovering the $N$ characteristic subspace beams based on the long-period reporting amount, the method further comprises:

performing orthogonalization on the recovered $N$ characteristic subspace beams; and
determining the channel information or the precoding matrix based on the beam superposition coefficient and orthogonalized $N$ characteristic subspace beams.

19. The method according to claim 15, wherein the first characteristic subspace beam grouping information comprises:

$N$ and $N_1$;
$N$ and a beam ratio $\beta$;
$N$; or
$N_1$ and $N_2$.

20. The method according to claim 15, wherein the first DFT base vector selection range information indicates that the second group of DFT base vectors is a subset of the first group of DFT base vectors.

21. The method according to claim 20, wherein the $M_1$ DFT base vectors and the $M_2$ DFT base vectors are indicated by using a combinatorial number;

a dimension of the characteristic subspace beam is $P \times 1$, a corresponding DFT base vector universal set comprises P DFT base vectors, and the indication information of the $M_1$ DFT base vectors indicates one of a plurality of first base vector groups selected from the P DFT base vectors, wherein the first base vector group comprises $M_1$ base vectors; and
the indication information of the $M_2$ DFT base

vectors indicates one of a plurality of second base vector groups selected from the $M_1$ DFT base vectors, wherein the second base vector group comprises $M_2$ base vectors.

22. The method according to claim 20, wherein the $M_1$ DFT base vectors are indicated by using a first bitmap, the first bitmap comprises P bits, bit values corresponding to the selected $M_1$ DFT base vectors are first values, and bit values corresponding to unselected $(P - M_1)$ DFT base vectors are second values; and
the $M_2$ DFT base vectors are indicated by using a second bitmap, the second bitmap comprises $M_1$ bits, bit values corresponding to the selected $M_2$ DFT base vectors are first values, and bit values corresponding to unselected $(M_1 - M_2)$ DFT base vectors are second values.

23. The method according to claim 15, wherein the first DFT base vector selection range information indicates that the second group of DFT base vectors is not a subset of the first group of DFT base vectors.

24. The method according to claim 23, wherein a dimension of the characteristic subspace beam is $P \times 1$, a corresponding DFT base vector universal set comprises P DFT base vectors, the indication information of the $M_1$ DFT base vectors indicates one of a plurality of third base vector groups selected from the P DFT base vectors, wherein the third base vector group comprises $M_1$ base vectors; and
the indication information of the $M_2$ DFT base vectors indicates one of a plurality of fourth base vector groups selected from the P DFT base vectors, wherein the fourth base vector group comprises $M_2$ base vectors.

25. The method according to claim 23, wherein the $M_1$ DFT base vectors are indicated by using a third bitmap, the third bitmap comprises P bits, bit values corresponding to the selected $M_1$ DFT base vectors are first values, and bit values corresponding to unselected $(P - M_1)$ DFT base vectors are second values; and
the $M_2$ DFT base vectors are indicated by using a fourth bitmap, the fourth bitmap comprises P bits, bit values corresponding to the selected $M_2$ DFT base vectors are first values, and bit values corresponding to unselected $(P - M_2)$ DFT base vectors are second values.

26. The method according to claim 15, wherein the first DFT base vector quantity information comprises:

$M_1$ and a base vector quantity ratio $\delta$;
$M_1$; or
$M_1$ and $M_2$.

27. A channel state information feedback apparatus, wherein the apparatus comprises a processing unit and a transceiver unit, wherein

the processing unit is configured to obtain a long-period reporting amount of a precoding matrix indicator PMI in channel state information, wherein the long-period reporting amount is used to determine $N$ characteristic subspace beams, the $N$ characteristic subspace beams comprise $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, wherein $N$, $N_1$, $N_2$, $M_1$, and $M_2$ are all positive integers, and the long-period reporting amount comprises indication information of the $M_1$ DFT base vectors, indication information of the $M_2$ DFT base vectors, a linear combination coefficient of the $M_1$ DFT base vectors, and a linear combination coefficient of the $M_2$ DFT base vectors; and
the transceiver unit is configured to send the long-period reporting amount of the PMI.

28. The apparatus according to claim 27, wherein the transceiver unit is further configured to receive first projection quantization information, wherein the first projection quantization information comprises at least one of the following: first characteristic subspace beam grouping information, first DFT base vector selection range information, and first DFT base vector quantity information; and
the processing unit is configured to determine the long-period reporting amount based on the first projection quantization information.

29. The apparatus according to claim 28, wherein the transceiver unit is further configured to send second projection quantization information, wherein the second projection quantization information comprises at least one of the following: second characteristic subspace beam grouping information, second DFT base vector selection range information, and second DFT base vector quantity information; and
the processing unit is further configured to determine the long-period reporting amount based on the first projection quantization information and the second projection quantization information.

30. The apparatus according to any one of claims 27 to 29, wherein the processing unit is further configured to determine a short-period reporting amount of the PMI, wherein the short-period reporting amount comprises a beam superposition coefficient, the long-period reporting amount and the short-period reporting amount are used to determine channel information or a precoding matrix, and the channel information or the precoding matrix is represented by linear superposition of the $N$ characteristic subspace beams; and
the transceiver unit is further configured to send the short-period reporting amount of the PMI.

31. The apparatus according to claim 30, wherein the processing unit is further configured to perform orthogonalization on the $N$ characteristic subspace beams; and
the processing unit is further configured to determine the beam superposition coefficient based on orthogonalized $N$ characteristic subspace beams.

32. The apparatus according to claim 28, wherein the first characteristic subspace beam grouping information comprises:

$N$ and $N_1$;
$N$ and a beam ratio $\beta$;
$N$; or
$N_1$ and $N_2$.

33. The apparatus according to claim 28, wherein the first DFT base vector selection range information indicates that the second group of DFT base vectors is a subset of the first group of DFT base vectors.

34. The apparatus according to claim 33, wherein the $M_1$ DFT base vectors and the $M_2$ DFT base vectors are indicated by using a combinatorial number;

a dimension of the characteristic subspace beam is $P \times 1$, a corresponding DFT base vector universal set comprises P DFT base vectors, and the indication information of the $M_1$ DFT base vectors indicates one of a plurality of first base vector groups selected from the P DFT base vectors, wherein the first base vector group comprises $M_1$ base vectors; and
the indication information of the $M_2$ DFT base vectors indicates one of a plurality of second base vector groups selected from the $M_1$ DFT base vectors, wherein the second base vector group comprises $M_2$ base vectors.

35. The apparatus according to claim 33, wherein the $M_1$ DFT base vectors are indicated by using a first bitmap, the first bitmap comprises P bits, bit values corresponding to the selected $M_1$ DFT base vectors are first values, and bit values corresponding to unselected $(P - M_1)$ DFT base vectors are second values; and
the $M_2$ DFT base vectors are indicated by using a second bitmap, the second bitmap comprises $M_1$ bits, bit values corresponding to the selected $M_2$ DFT base vectors are first values, and bit values corresponding to unselected ($M_1$ - $M_2$) DFT base vectors are second values.

36. The apparatus according to claim 28, wherein the first DFT base vector selection range information indicates that the second group of DFT base vectors is not a subset of the first group of DFT base vectors.

37. The method or the apparatus according to claim 36, wherein a dimension of the characteristic subspace beam is P×1, a corresponding DFT base vector universal set comprises P DFT base vectors, the indication information of the $M_1$ DFT base vectors indicates one of a plurality of third base vector groups selected from the P DFT base vectors, wherein the third base vector group comprises $M_1$ base vectors; and
the indication information of the $M_2$ DFT base vectors indicates one of a plurality of fourth base vector groups selected from the P DFT base vectors, wherein the fourth base vector group comprises $M_2$ base vectors.

38. The apparatus according to claim 36, wherein the $M_1$ DFT base vectors are indicated by using a third bitmap, the third bitmap comprises P bits, bit values corresponding to the selected $M_1$ DFT base vectors are first values, and bit values corresponding to unselected ($P$ - $M_1$) DFT base vectors are second values; and
the $M_2$ DFT base vectors are indicated by using a fourth bitmap, the fourth bitmap comprises P bits, bit values corresponding to the selected $M_2$ DFT base vectors are first values, and bit values corresponding to unselected ($P$ - $M_2$) DFT base vectors are second values.

39. The apparatus according to claim 28, wherein the first DFT base vector quantity information comprises:

$M_1$ and a base vector quantity ratio $\delta$;
$M_1$; or
$M_1$ and $M_2$.

40. A channel state information feedback apparatus, wherein the apparatus comprises a transceiver unit and a processing unit, wherein

the transceiver unit is configured to receive a long-period reporting amount of a precoding matrix indicator PMI in channel state information, wherein the long-period reporting amount is used to determine $N$ characteristic subspace beams, the $N$ characteristic subspace beams

comprise $N_1$ characteristic subspace beams and $N_2$ characteristic subspace beams, the $N_1$ characteristic subspace beams are represented by a linear combination of $M_1$ DFT base vectors in a first group of discrete Fourier transform DFT base vectors, and the $N_2$ characteristic subspace beams are represented by a linear combination of $M_2$ DFT base vectors in a second group of DFT base vectors, wherein $N$, $N_1$, $N_2$, $M_1$, and $M_2$ are all positive integers, and the long-period reporting amount comprises indication information of the $M_1$ DFT base vectors, indication information of the $M_2$ DFT base vectors, a linear combination coefficient of the $M_1$ DFT base vectors, and a linear combination coefficient of the $M_2$ DFT base vectors; and
the processing unit is configured to recover the $N$ characteristic subspace beams based on the long-period reporting amount.

41. The apparatus according to claim 40, wherein the transceiver unit is further configured to send first projection quantization information, wherein the first projection quantization information comprises at least one of the following: first characteristic subspace beam grouping information, first DFT base vector selection range information, and first DFT base vector quantity information; and
the processing unit is configured to recover the $N$ characteristic subspace beams based on the first projection quantization information and the long-period reporting amount.

42. The apparatus according to claim 41, wherein the transceiver unit is further configured to receive second projection quantization information, wherein the second projection quantization information comprises at least one of the following: second characteristic subspace beam grouping information, second DFT base vector selection range information, and second DFT base vector quantity information; and
the processing unit is further configured to recover the $N$ characteristic subspace beams based on the first projection quantization information, the second projection quantization information, and the long-period reporting amount.

43. The apparatus according to any one of claims 40 to 42, wherein the transceiver unit is further configured to receive a short-period reporting amount of the PMI, and the short-period reporting amount comprises a beam superposition coefficient; and
the processing unit is further configured to determine channel information or a precoding matrix based on the short-period reporting amount and the long-period reporting amount, wherein the channel information or the precoding matrix is represented by linear superposition of the $N$ characteristic subspace beams.

**44.** The apparatus according to claim 43, wherein the processing unit is further configured to perform orthogonalization on the recovered $N$ characteristic subspace beams; and
the processing unit is further configured to determine the channel information or the precoding matrix based on the beam superposition coefficient and orthogonalized $N$ characteristic subspace beams.

**45.** The apparatus according to claim 41, wherein the first characteristic subspace beam grouping information comprises:

$N$ and $N_1$;
$N$ and a beam ratio $\beta$;
$N$; or
$N_1$ and $N_2$.

**46.** The apparatus according to claim 41 or 45, wherein the first DFT base vector selection range information indicates that the second group of DFT base vectors is a subset of the first group of DFT base vectors.

**47.** The apparatus according to claim 46, wherein the $M_1$ DFT base vectors and the $M_2$ DFT base vectors are indicated by using a combinatorial number;

a dimension of the characteristic subspace beam is P $\times$ 1, a corresponding DFT base vector universal set comprises P DFT base vectors, and the indication information of the $M_1$ DFT base vectors indicates one of a plurality of first base vector groups selected from the P DFT base vectors, wherein the first base vector group comprises $M_1$ base vectors; and
the indication information of the $M_2$ DFT base vectors indicates one of a plurality of second base vector groups selected from the $M_1$ DFT base vectors, wherein the second base vector group comprises $M_2$ base vectors.

**48.** The apparatus according to claim 46, wherein the $M_1$ DFT base vectors are indicated by using a first bitmap, the first bitmap comprises P bits, bit values corresponding to the selected $M_1$ DFT base vectors are first values, and bit values corresponding to unselected $(P - M_1)$ DFT base vectors are second values; and
the $M_2$ DFT base vectors are indicated by using a second bitmap, the second bitmap comprises $M_1$ bits, bit values corresponding to the selected $M_2$ DFT base vectors are first values, and bit values corresponding to unselected $(M_1 - M_2)$ DFT base vectors are second values.

**49.** The apparatus according to claim 41 or 45, wherein the first DFT base vector selection range information indicates that the second group of DFT base vectors is not a subset of the first group of DFT base vectors.

**50.** The apparatus according to claim 49, wherein a dimension of the characteristic subspace beam is P$\times$1, a corresponding DFT base vector universal set comprises P DFT base vectors, the indication information of the $M_1$ DFT base vectors indicates one of a plurality of third base vector groups selected from the P DFT base vectors, wherein the third base vector group comprises $M_1$ base vectors; and
the indication information of the $M_2$ DFT base vectors indicates one of a plurality of fourth base vector groups selected from the P DFT base vectors, wherein the fourth base vector group comprises $M_2$ base vectors.

**51.** The apparatus according to claim 49, wherein the $M_1$ DFT base vectors are indicated by using a third bitmap, the third bitmap comprises P bits, bit values corresponding to the selected $M_1$ DFT base vectors are first values, and bit values corresponding to unselected $(P - M_1)$ DFT base vectors are second values; and
the $M_2$ DFT base vectors are indicated by using a fourth bitmap, the fourth bitmap comprises P bits, bit values corresponding to the selected $M_2$ DFT base vectors are first values, and bit values corresponding to unselected $(P - M_2)$ DFT base vectors are second values.

**52.** The apparatus according to claim 41 or 45, wherein the first DFT base vector quantity information comprises:

$M_1$ and a base vector quantity ratio $\delta$;
$M_1$; or
$M_1$ and $M_2$.

**53.** A channel state information feedback apparatus, comprising a processor, wherein the processor is configured to: couple to a memory, read instructions in the memory, and implement the method according to any one of claims 1 to 13 or 14 to 26 based on the instructions.

**54.** A channel state information feedback system, comprising the apparatus according to any one of claims 27 to 39 and the apparatus according to any one of claims 40 to 52.

**55.** A computer-readable storage medium, storing a computer program, wherein when the program is executed by a processor, the method according to any one of claims 1 to 13 or 14 to 26 is performed.

**56.** A chip, wherein the chip is configured to perform the method according to any one of claims 1 to 13, or is configured to perform the method according to any one of claims 14 to 26.

57. A chip module, comprising a transceiver component and a chip, wherein the chip is configured to perform the method according to any one of claims 1 to 13, or configured to perform the method according to any one of claims 14 to 26.

58. A computer program product, wherein when the computer program product runs on a computing device, the computer program product is configured to perform the method according to any one of claims 1 to 13, or is configured to perform the method according to any one of claims 14 to 26.

$$P \left[ \underset{N}{\mathbf{B}} \right] \approx P \left[ \underset{M}{\widehat{\mathbf{B}}} \right] \times \left[ \underset{N}{\mathbf{C_{13}}} \right]$$

DFT base vector

Combination coefficient

FIG. 1

FIG. 2

S301: Channel measurement configuration information

S302: Channel measurement pilot

S303: The terminal feeds back CSI based on a pilot measurement result

S304: The access network device sends data based on the CSI fed back by the terminal

Access network device

Terminal

FIG. 3

$$N_t * N_f \left[ \begin{array}{c} N_r \text{ or } N_{rank} \\ \mathbf{H} \end{array} \right] \approx N_t * N_f \left[ \begin{array}{cc} 2N \\ \mathbf{B} \\ \mathbf{B} \end{array} \right] \times 2N \left[ \begin{array}{c} N_r \text{ or } N_{rank} \\ \mathbf{C_2} \end{array} \right]$$

FIG. 4

Terminal

Access network device

S501: The terminal obtains a long-period reporting amount of a PMI in channel state information

S502: Long-period reporting amount of the PMI

S503: The access network device recovers N characteristic subspace beams based on the long-period reporting amount

FIG. 5

Terminal

Access network device

S601: First projection quantization information

S602: The terminal determines a long-period reporting amount based on the first projection quantization information

S603: The terminal performs orthogonalization on N characteristic subspace beams

S604: The terminal determines a beam superposition coefficient based on orthogonalized N characteristic subspace beams

S605: Long-period reporting amount and short-period reporting amount of a PMI

S606: The access network device recovers the N characteristic subspace beams based on the first projection quantization information and the long-period reporting amount

S607: The access network device performs orthogonalization on the recovered N characteristic subspace beams

S608: Determine channel information or a precoding matrix based on the beam superposition coefficient and the orthogonalized N characteristic subspace beams

FIG. 6

$N_1$  $N_2$                    $M_1$                    $N_1 + N_2$

$P$      **B**      $\approx$      $\widehat{\mathbf{B}}$      $\times$      $M_1$      $\rightarrow M_2$

...

Combination
coefficient $\mathbf{C}_{13}$

Characteristic
subspace beam

DFT base vector

**FIG. 7a**

$N_1$  $N_2$            $M_1$            $M_2$            $N_1$  $N_2$

$P$    $\mathbf{B_1}$  $\mathbf{B_2}$    $\approx$    $\widehat{\mathbf{B}}_1$    $\widehat{\mathbf{B}}_2$    $M_1$  $\times$    $\mathbf{C}_{13,1}$

$\mathbf{C}_{13,2}$    $M_2$

Characteristic
subspace beam

DFT base vector

Combination
coefficient $\mathbf{C}_{13}$

**FIG. 7b**

```
┌─────────────────────────┐                    ┌─────────────────────────┐
│        Terminal         │                    │  Access network device  │
└─────────────────────────┘                    └─────────────────────────┘
             │                                               │
┌─────────────────────────────┐                             │
│ S801: The terminal obtains a │                            │
│ long-period reporting amount │                            │
│ of a PMI in channel state    │                            │
│ information                  │                             │
└─────────────────────────────┘                             │
             │                                               │
┌─────────────────────────────┐                             │
│ S802: The terminal performs  │                            │
│ orthogonalization on N       │                            │
│ characteristic subspace      │                            │
│ beams                        │                             │
└─────────────────────────────┘                             │
             │                                               │
┌─────────────────────────────┐                             │
│ S803: The terminal determines│                            │
│ a beam superposition         │                            │
│ coefficient based on         │                            │
│ orthogonalized N             │                            │
│ characteristic subspace beams│                            │
└─────────────────────────────┘                             │
             │                                               │
  S804: Long-period reporting amount and short-             │
      period reporting amount of the PMI                    │
             │──────────────────────────────────────────────▶│
             │                                               │
             │                         ┌─────────────────────────────┐
             │                         │ S805: The access network    │
             │                         │ device recovers the N       │
             │                         │ characteristic subspace     │
             │                         │ beams based on the long-    │
             │                         │ period reporting amount     │
             │                         └─────────────────────────────┘
             │                                               │
             │                         ┌─────────────────────────────┐
             │                         │ S806: The access network    │
             │                         │ device performs             │
             │                         │ orthogonalization on the    │
             │                         │ recovered N characteristic  │
             │                         │ subspace beams              │
             │                         └─────────────────────────────┘
             │                                               │
             │                         ┌─────────────────────────────┐
             │                         │ S807: Determine channel     │
             │                         │ information or a precoding   │
             │                         │ matrix based on the beam    │
             │                         │ superposition coefficient   │
             │                         │ and the orthogonalized N    │
             │                         │ characteristic subspace     │
             │                         │ beams                       │
             │                         └─────────────────────────────┘
             │                                               │
```

FIG. 8

Channel state information
feedback apparatus 900

Processing unit 910

Transceiver unit 920

FIG. 9

Channel state information feedback apparatus 1000

Processor 1010

Interface circuit 1020

Memory 1030

FIG. 10

# EP 4 447 353 A1

<table>
<tr><td colspan="2">INTERNATIONAL SEARCH REPORT</td><td colspan="2">International application No.<br><br>**PCT/CN2022/139343**</td></tr>
</table>

**A. CLASSIFICATION OF SUBJECT MATTER**

H04L1/06(2006.01)i

According to International Patent Classification (IPC) or to both national classification and IPC

**B. FIELDS SEARCHED**

Minimum documentation searched (classification system followed by classification symbols)

IPC: H04L, H04B, H04W

Documentation searched other than minimum documentation to the extent that such documents are included in the fields searched

Electronic data base consulted during the international search (name of data base and, where practicable, search terms used)

CNTXT, CNKI, WPABS, ENTXTC, IEEE, 3GPP: 长周期, 上报量, 预编码, 矩阵, 索引, 离散, 傅里叶, 傅力叶, 变换, 子空间, 波束, 指示, 线性组合, long, period, report??, amount, DFT, PMI, subspace, vector, sub-space, beam, precoding, matrix, indicator, index, transform, linear combination

**C. DOCUMENTS CONSIDERED TO BE RELEVANT**

| Category* | Citation of document, with indication, where appropriate, of the relevant passages | Relevant to claim No. |
|---|---|---|
| A | CN 110830092 A (HUAWEI TECHNOLOGIES CO., LTD.) 21 February 2020 (2020-02-21) description, paragraphs 5-98 | 1-58 |
| A | US 2018138950 A1 (SAMSUNG ELECTRONICS CO., LTD.) 17 May 2018 (2018-05-17) entire document | 1-58 |
| A | US 2020083938 A1 (LG ELECTRONICS INC.) 12 March 2020 (2020-03-12) entire document | 1-58 |
| A | US 2021273708 A1 (DATANG MOBILE COMMUNICATIONS EQUIPMENT CO., LTD.) 02 September 2021 (2021-09-02) entire document | 1-58 |
| A | MOTOROLA. "R1-103176 "Two-component Feedback Design and Codebooks"" *3GPP tsg_ran\WG1_RL1*, No. TSGR1_61, 07 May 2010 (2010-05-07), entire document | 1-58 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 February 2023** | **10 February 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/CN2022/139343**</td></tr>
</table>

| Patent document cited in search report | | | Publication date (day/month/year) | Patent family member(s) | | | Publication date (day/month/year) |
|---|---|---|---|---|---|---|---|
| CN | 110830092 | A | 21 February 2020 | EP | 3826199 | A1 | 26 May 2021 |
| | | | | EP | 3826199 | A4 | 15 September 2021 |
| | | | | US | 2021167835 | A1 | 03 June 2021 |
| | | | | US | 11165483 | B2 | 02 November 2021 |
| | | | | WO | 2020029937 | A1 | 13 February 2020 |
| US | 2018138950 | A1 | 17 May 2018 | EP | 3523888 | A1 | 14 August 2019 |
| | | | | EP | 3523888 | A4 | 23 October 2019 |
| | | | | WO | 2018088739 | A1 | 17 May 2018 |
| | | | | US | 10396866 | B2 | 27 August 2019 |
| | | | | KR | 20190077521 | A | 03 July 2019 |
| | | | | KR | 102365349 | B1 | 21 February 2022 |
| US | 2020083938 | A1 | 12 March 2020 | JP | 2022000963 | A | 04 January 2022 |
| | | | | WO | 2018174636 | A2 | 27 September 2018 |
| | | | | WO | 2018174636 | A3 | 15 November 2018 |
| | | | | KR | 20210153748 | A | 17 December 2021 |
| | | | | KR | 102364258 | B1 | 17 February 2022 |
| | | | | JP | 2020511899 | A | 16 April 2020 |
| | | | | JP | 6942813 | B2 | 29 September 2021 |
| | | | | US | 11271625 | B2 | 08 March 2022 |
| | | | | US | 2022006497 | A1 | 06 January 2022 |
| | | | | KR | 20190120372 | A | 23 October 2019 |
| | | | | KR | 102338306 | B1 | 10 December 2021 |
| | | | | EP | 3605868 | A2 | 05 February 2020 |
| | | | | EP | 3605868 | A4 | 16 December 2020 |
| US | 2021273708 | A1 | 02 September 2021 | EP | 3806346 | A1 | 14 April 2021 |
| | | | | EP | 3806346 | A4 | 21 July 2021 |
| | | | | US | 11190257 | B2 | 30 November 2021 |

Form PCT/ISA/210 (patent family annex) (July 2022)

**REFERENCES CITED IN THE DESCRIPTION**

**Patent documents cited in the description**

- CN 202111674328